# EUROPEAN PATENT APPLICATION

(11) **EP 4 852 532 A1**
(43) Date of publication of application: **09.12.2026**
(21) Application number: 25749014.4
(22) Date of filing: 24.01.2025
(51) Int. Cl.: H04W 52/02, H04W 48/14, H04W 48/10, H04W 48/12, H04B 7/06, H04W 72/232, H04W 72/1273

(54) **METHOD AND APPARATUS FOR TRANSMITTING AND RECEIVING ON-DEMAND SYSTEM INFORMATION FOR LOW POWER COMMUNICATION**

(30) Priority: 02.02.2024 KR 20240016876; 07.03.2024 KR 20240032718; 07.05.2024 KR 20240060106; 10.09.2024 KR 20240123059; 09.12.2024 KR 20240181792
(71) Applicant: Electronics and Telecommunications Research Institute, Daejeon 34129 (KR)
(72) Inventor: MOON, Sung Hyun, Daejeon 34129 (KR); LEE, Junghoon, Daejeon 34129 (KR); KIM, Cheulsoon, Daejeon 34129 (KR)
(74) Representative: Betten & Resch
(86) International application number: PCT/KR2025/001460
(87) International publication number: WO 2025/165111

(57) **Abstract**

Disclosed are a method and an apparatus for transmitting and receiving on-demand system information for low power communication. A method of a terminal comprises the steps of: receiving a first signaling message from a first cell; receiving a second signaling message from a second cell; performing a procedure for determining whether to transmit a WUS to the second cell on the basis of the first signaling message and the second signaling message; transmitting the WUS to the second cell in an uplink resource on the basis of a result of the determination procedure; receiving a response message to the WUS from the second cell; and receiving first system information of the second cell from the second cell.

## Description

### [Technical Field]

The present disclosure relates to a low-power communication technique, and more particularly, to a technique for transmitting and receiving on-demand system information for reducing power consumption in a communication system.

### [Background Art]

The importance of developing next-generation communication systems (e.g., New Radio (NR) systems, sixth-generation (6G) systems, etc.) as infrastructure for the expansion of various future convergence services is increasing. These next-generation systems can support not only conventional mobile communication frequency bands but also millimeter-wave, terahertz, and upper-mid frequency bands. They can accommodate a wider range of performance indicators and deployment scenarios compared to conventional systems (e.g., Long Term Evolution (LTE) communication systems). Accordingly, the processing capabilities of communication nodes in next-generation systems can be enhanced, which may lead to increased power consumption to support the improved communication performance. To achieve carbon neutrality and/or ensure the profitability of communication service providers, technologies for reducing the power consumption of communication nodes (e.g., base stations, terminals, etc.) may be required.

### [Disclosure]

### [Technical Problem]

The present disclosure is directed to providing a method and an apparatus for transmitting and receiving on-demand system information for reducing power consumption in a communication system.

### [Technical Solution]

A method of a terminal, according to exemplary embodiments of the present disclosure for achieving the above-described objective, may comprise: receiving a first signaling message from a first cell; receiving a second signaling message from a second cell; performing a determination procedure for determining whether to transmit a wake-up signal (WUS) to the second cell based on the first signaling message and the second signaling message; transmitting the WUS to the second cell in an uplink resource based on a result of the determination procedure; receiving a response message for the WUS from the second cell; and receiving first system information of the second cell from the second cell, wherein the uplink resource is configured based on the first signaling message, and the first system information includes at least a system information block 1 (SIB1).

The first signaling message may be included in second system information of the second cell, which is received from the first cell.

The second signaling message may be a payload included in a master information block (MIB) received from the second cell or included in a physical broadcast channel (PBCH) received from the second cell.

The second signaling message may include a codepoint of a field indicating a number of subcarriers between resource blocks (RBs) occupied by a synchronization signal block (SSB) received from the second cell and an RB boundary of the second cell.

The determination procedure may include a procedure for determining whether the second cell is transmitting the first system information.

The first system information may be included in a physical downlink shared channel (PDSCH), and the terminal may monitor a physical downlink control channel (PDCCH) that schedules the PDSCH in a search space set.

Configuration information of the search space set may be included in an MIB of the second cell together with the second signaling message, and the MIB may be transmitted from the second cell to the terminal.

Configuration information of the search space set may be included in second system information of the second cell together with the first signaling message, and the second system information may be transmitted from the first cell to the terminal.

The first system information may be received within a time window, and the time window may be determined based on configuration information included in second system information of the second cell, the second system information including the first signaling message.

The terminal may camp on the second cell based on the first system information regardless of indication information of an access barring field included in an MIB of the second cell.

A method of a base station, according to exemplary embodiments of the present disclosure for achieving the above-described objective, may comprise: transmitting a first signaling message to a terminal in a first cell of the base station; transmitting a second signaling message to the terminal in a second cell of the base station; receiving a wake-up signal (WUS) from the terminal in an uplink resource of the second cell; transmitting a response message for the WUS to the terminal in the second cell; and transmitting first system information of the second cell to the terminal in the second cell, wherein the uplink resource is configured based on the first signaling message, and the first system information includes at least a system information block 1 (SIB1).

The first signaling message may be included in second system information of the second cell transmitted from the first cell.

The second signaling message may be a payload included in a master information block (MIB) transmitted from the second cell or included in a physical broadcast channel (PBCH) transmitted from the second cell.

The second signaling message may include a codepoint of a field indicating a number of subcarriers between resource blocks (RBs) occupied by a synchronization signal block (SSB) transmitted from the second cell and an RB boundary of the second cell.

The first system information may be included in a physical downlink shared channel (PDSCH), and a physical downlink control channel (PDCCH) that schedules the PDSCH may be transmitted in a search space set.

Configuration information of the search space set may be included in an MIB of the second cell together with the second signaling message, and the MIB may be transmitted from the second cell to the terminal.

Configuration information of the search space set may be included in second system information of the second cell together with the first signaling message, and the second system information may be transmitted from the first cell to the terminal.

The first system information may be transmitted within a time window, and the time window may be determined based on configuration information included in second system information of the second cell, the second system information including the first signaling message.

A terminal, according to exemplary embodiments of the present disclosure for achieving the above-described objective, may comprise at least one processor, and the at least one processor may cause the terminal to perform: receiving a first signaling message from a first cell; receiving a second signaling message from a second cell; performing a determination procedure for determining whether to transmit a wake-up signal (WUS) to the second cell based on the first signaling message and the second signaling message; transmitting the WUS to the second cell in an uplink resource based on a result of the determination procedure; receiving a response message for the WUS from the second cell; and receiving first system information of the second cell from the second cell, wherein the uplink resource is configured based on the first signaling message, and the first system information includes at least a system information block 1 (SIB1).

The first signaling message may be included in second system information of the second cell, which is received from the first cell.

### [Advantageous Effects]

According to the present disclosure, a first cell may be configured to periodically transmit system information, and a second cell may be configured not to periodically transmit system information in order to reduce power consumption. When the second cell is determined not to periodically transmit system information, a terminal may transmit, to the second cell, a signal requesting transmission of the system information, the signal including, for example, a wake-up signal (WUS). The second cell may receive the signal requesting transmission of the system information from the terminal and may transmit the system information to the terminal in response to the request from the terminal. The terminal may receive the system information from the second cell.

### [Description of Drawings]

FIG. 1 is a conceptual diagram illustrating exemplary embodiments of a communication system.
FIG. 2 is a block diagram illustrating exemplary embodiments of an apparatus.
FIG. 3A is a conceptual diagram illustrating a first multiplexing pattern of an SSB and a CORESET.
FIG. 3B is a conceptual diagram illustrating a second multiplexing pattern of an SSB and a CORESET.
FIG. 3C is a conceptual diagram illustrating a third multiplexing pattern of an SSB and a CORESET.
FIG. 4 is a conceptual diagram illustrating a first exemplary embodiment of an on-demand SIB1 transmission method.
FIG. 5 is a conceptual diagram illustrating a first exemplary embodiment of a preamble allocation method for UL WUS.
FIG. 6 is a conceptual diagram illustrating a second exemplary embodiment of a preamble allocation method for UL WUS.
FIG. 7 is a conceptual diagram illustrating a third exemplary embodiment of a preamble allocation method for UL WUS.
FIG. 8A is a conceptual diagram illustrating a first exemplary embodiment of a method for configuring a UL WUS resource including first resources.
FIG. 8B is a conceptual diagram illustrating a second exemplary embodiment of a method for configuring a UL WUS resource including first resources.
FIG. 9A is a conceptual diagram illustrating a first exemplary embodiment of a method for configuring a first resource for asynchronous transmission.
FIG. 9B is a conceptual diagram illustrating a second exemplary embodiment of the method for configuring a first resource for asynchronous transmission.
FIG. 10 is a conceptual diagram illustrating a first exemplary embodiment of a method for configuring a frequency resource of a UL WUS.
FIG. 11 is a conceptual diagram illustrating a second exemplary embodiment of a method for configuring a frequency resource of a UL WUS.
FIG. 12 is a sequence chart illustrating a first exemplary embodiment of a random access method based on a conventional four-step RACH procedure.
FIG. 13 is a sequence chart illustrating a first exemplary embodiment of a four-step random access method based on UL WUS.
FIG. 14 is a conceptual diagram illustrating a second exemplary embodiment of a four-step random access method based on UL WUS.
FIG. 15 is a conceptual diagram illustrating a third exemplary embodiment of a four-step random access method based on UL WUS.
FIG. 16 is a conceptual diagram illustrating a fourth exemplary embodiment of a four-step random access method based on UL WUS.
FIG. 17 is a sequence chart illustrating a first exemplary embodiment of a random access method based on a conventional two-step RACH procedure.
FIG. 18 is a sequence chart illustrating a first exemplary embodiment of a two-step random access method based on UL WUS.
FIG. 19 is a sequence chart illustrating a second exemplary embodiment of a two-step random access method based on UL WUS.

### [Mode for Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication system to which exemplary embodiments according to the present disclosure are applied will be described. The communication system may be the 4G communication system (e.g., Long-Term Evolution (LTE) communication system or LTE-A communication system), the 5G communication system (e.g., New Radio (NR) communication system), the sixth generation (6G) communication system, or the like. The 4G communication system may support communications in a frequency band of 6 GHz or below, and the 5G communication system may support communications in a frequency band of 6 GHz or above as well as the frequency band of 6 GHz or below. The communication system to which the exemplary embodiments according to the present disclosure are applied is not limited to the contents described below, and the exemplary embodiments according to the present disclosure may be applied to various communication systems. Here, the communication system may be used in the same sense as a communication network, 'LTE' may refer to '4G communication system', 'LTE communication system', or 'LTE-A communication system', and 'NR' may refer to '5G communication system' or 'NR communication system'.

In exemplary embodiments, 'configuration of an operation (e.g., transmission operation)' may mean 'signaling of configuration information (e.g., information element(s), parameter(s)) for the operation' and/or 'signaling of information indicating performing of the operation'. In other words, 'an operation (e.g., transmission operation) being configured in a communication node' may mean that the communication node receives 'configuration information (e.g., information element, parameter) for the operation' and/or 'information indicating to perform the operation'. 'An information element (e.g., parameter) being configured in a communication node' may mean that the information element is signaled to the communication node (e.g., the communication node receives the information element)'. Signaling may be at least one of system information (SI) signaling (e.g., transmission of a system information block (SIB) and/or master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)).

In the present disclosure, a 'time' may mean a time point, and 'time' and 'time point' may be used with the same meaning. A reception time of a signal or channel may mean a reception start time or a reception end time. A transmission time of a signal or channel may mean a transmission start time or a transmission end time.

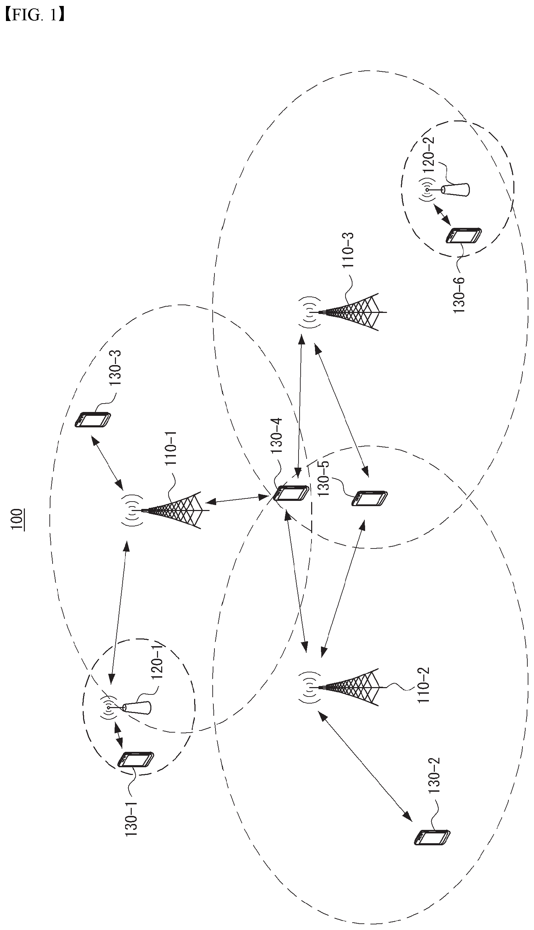

FIG. 1 is a conceptual diagram illustrating exemplary embodiments of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. Also, the communication system 100 may further comprise a core network (e.g., a serving gateway (S-GW), a packet data network (PDN) gateway (P-GW), and a mobility management entity (MME)). When the communication system 100 is a 5G communication system (e.g., New Radio (NR) system), the core network may include an access and mobility management function (AMF), a user plane function (UPF), a session management function (SMF), and the like.

The plurality of communication nodes 110 to 130 may support communication protocols defined in the 3rd generation partnership project (3GPP) technical specifications (e.g., LTE communication protocol, LTE-A communication protocol, NR communication protocol, or the like). The plurality of communication nodes 110 to 130 may support code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, filtered OFDM based communication protocol, cyclic prefix OFDM (CP-OFDM) based communication protocol, discrete Fourier transform-spread-OFDM (DFT-s-OFDM) based communication protocol, orthogonal frequency division multiple access (OFDMA) based communication protocol, single carrier FDMA (SC-FDMA) based communication protocol, non-orthogonal multiple access (NOMA) based communication protocol, generalized frequency division multiplexing (GFDM) based communication protocol, filter bank multi-carrier (FBMC) based communication protocol, universal filtered multi-carrier (UFMC) based communication protocol, space division multiple access (SDMA) based communication protocol, or the like. Each of the plurality of communication nodes may mean an apparatus or a device. Exemplary embodiments may be performed by an apparatus or device. A structure of the apparatus (or, device) may be as follows.

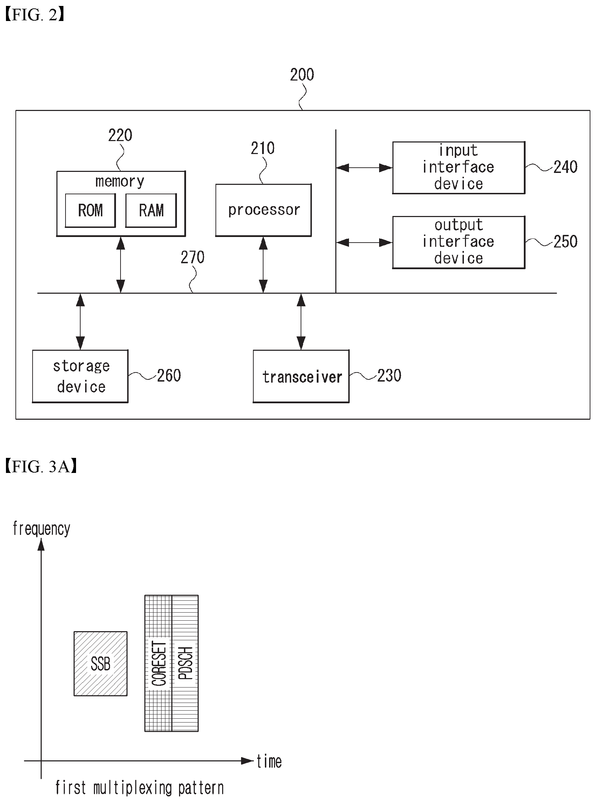

FIG. 2 is a block diagram illustrating exemplary embodiments of an apparatus.

Referring to FIG. 2, an apparatus 200 may comprise at least one processor 210, a memory 220, and a transceiver 230 connected to the network for performing communications. Also, the apparatus 200 may further comprise an input interface device 240, an output interface device 250, a storage device 260, and the like. The respective components included in the apparatus 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to the cell coverage of the first base station 110-1. Also, the second terminal 130-2, the fourth terminal 130-4, and the fifth terminal 130-5 may belong to the cell coverage of the second base station 110-2. Also, the fifth base station 120-2, the fourth terminal 130-4, the fifth terminal 130-5, and the sixth terminal 130-6 may belong to the cell coverage of the third base station 110-3. Also, the first terminal 130-1 may belong to the cell coverage of the fourth base station 120-1, and the sixth terminal 130-6 may belong to the cell coverage of the fifth base station 120-2.

Here, each of the plurality of base stations 110-1, 110-2, 110-3, 120-1, and 120-2 may be referred to as NodeB (NB), evolved NodeB (eNB), gNB, advanced base station (ABS), high reliability-base station (HR-BS), base transceiver station (BTS), radio base station, radio transceiver, access point (AP), access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may be referred to as user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul link or a non-ideal backhaul link, and exchange information with each other via the ideal or non-ideal backhaul. Also, each of the plurality of base stations 110-1, 110-2, 110-3, 120-1, and 120-2 may be connected to the core network through the ideal backhaul link or non-ideal backhaul link. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., single-user MIMO (SU-MIMO), multi-user MIMO (MU-MIMO), massive MIMO, or the like), a coordinated multipoint (CoMP) transmission, a carrier aggregation (CA) transmission, a transmission in unlicensed band, a device-to-device (D2D) communication (or, proximity services (ProSe)), an Internet of Things (IoT) communication, a dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

Each of the first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

The present disclosure may relate to a technique for transmitting and receiving signals in a communication system. More specifically, the present disclosure relates to a method and apparatus for performing multi-transmission point based signal transmission and beam management in a communication system. The following exemplary embodiments may be applied to an NR communication system and, in addition to the NR communication system, may also be applied to other communication systems (e.g., LTE communication system, fifth generation (5G) communication system, sixth generation (6G) communication system, etc.).

A numerology applied to physical signals and channels in the communication system (e.g., NR communication system or 6G communication system) may be variable. The numerology may vary to satisfy various technical requirements of the communication system. In the communication system to which a cyclic prefix (CP) based OFDM waveform technology is applied, the numerology may include a subcarrier spacing and a CP length (or CP type). Table 1 below may be a first exemplary embodiment of configuration of numerologies for the CP-based OFDM. The subcarrier spacings may have an exponential multiplication relationship of 2, and the CP length may be scaled at the same ratio as the OFDM symbol length. Depending on a frequency band in which the communication system operates, at least some numerologies among the numerologies of Table 1 may be supported. In addition, in the communication system, numerologies not listed in Table 1 may be further supported. CP type(s) not listed in Table 1 (e.g., extended CP) may be additionally supported for a specific subcarrier spacing (e.g., 60 kHz).

**[Table 1]**

| Subcarrier spacing | 15kHz | 30kHz | 60kHz | 120kHz | 240kHz | 480kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

In the following description, a frame structure in the communication system will be described. In the time domain, elements constituting a frame structure may include a subframe, slot, mini-slot, symbol, and the like. The subframe may be used as a unit for transmission, measurement, and the like, and the length of the subframe may have a fixed value (e.g., 1 ms) regardless of a subcarrier spacing. A slot may comprise consecutive symbols (e.g., 14 OFDM symbols). The length of the slot may be variable differently from the length of the subframe. For example, the length of the slot may be inversely proportional to the subcarrier spacing.

A slot may be used as a unit for transmission, measurement, scheduling, resource configuration, timing (e.g., scheduling timing, hybrid automatic repeat request (HARQ) timing, channel state information (CSI) measurement and reporting timing, etc.), and the like. The length of an actual time resource used for transmission, measurement, scheduling, resource configuration, etc. may not match the length of a slot. A mini-slot may include consecutive symbol(s), and the length of a mini-slot may be shorter than the length of a slot. A mini-slot may be used as a unit for transmission, measurement, scheduling, resource configuration, timing, and the like. A mini-slot (e.g., the length of a mini-slot, a mini-slot boundary, etc.) may be predefined in the technical specification. Alternatively, a mini-slot (e.g., the length of a mini-slot, a mini-slot boundary, etc.) may be configured (or indicated) to the terminal. When a specific condition is satisfied, use of a mini-slot may be configured (or indicated) to the terminal.

The base station may schedule a data channel (e.g., physical downlink shared channel (PDSCH), physical uplink shared channel (PUSCH), physical sidelink shared channel (PSSCH)) using some or all of symbols constituting a slot. In particular, for URLLC transmission, unlicensed band transmission, transmission in a situation where an NR communication system and an LTE communication system coexist, and multi-user scheduling based on analog beamforming, a data channel may be transmitted using a portion of a slot. In addition, the base station may schedule a data channel using a plurality of slots. In addition, the base station may schedule a data channel using at least one mini-slot.

In the frequency domain, elements constituting the frame structure may include a resource block (RB), subcarrier, and the like. One RB may include consecutive subcarriers (e.g., 12 subcarriers). The number of subcarriers constituting one RB may be constant regardless of a numerology. In this case, a bandwidth occupied by one RB may be proportional to a subcarrier spacing of a numerology. An RB may be used as a transmission and resource allocation unit for a data channel, control channel, and the like. Resource allocation of a data channel may be performed in units of RBs or RB groups (e.g., resource block group (RBG)). One RBG may include one or more consecutive RBs. Resource allocation of a control channel may be performed in units of control channel elements (CCEs). One CCE may include one or more RBs in the frequency domain.

In the communication system (e.g., NR communication system), the above-described unit time resource (hereinafter, 'slot') may be composed of a combination of one or more of downlink period, flexible period (or unknown period), and an uplink period. Each of a downlink period, flexible period, and uplink period may be comprised of one or more consecutive symbols. A flexible period may be located between a downlink period and an uplink period, between a first downlink period and a second downlink period, or between a first uplink period and a second uplink period. When a flexible period is inserted between a downlink period and an uplink period, the flexible period may be used as a guard period.

A slot may include one or more flexible periods. Alternatively, a slot may not include a flexible period. The terminal may perform a predefined operation in a flexible period. Alternatively, the terminal may perform an operation configured by the base station semi-statically or periodically. For example, the periodic operation configured by the base station may include a PDCCH monitoring operation, synchronization signal/physical broadcast channel (SS/PBCH) block reception and measurement operation, channel state information-reference signal (CSI-RS) reception and measurement operation, downlink semi-persistent scheduling (SPS) PDSCH reception operation, sounding reference signal (SRS) transmission operation, physical random access channel (PRACH) transmission operation, periodically-configured PUCCH transmission operation, PUSCH transmission operation according to a configured grant, and the like. A flexible symbol may be overridden by a downlink symbol or an uplink symbol. When a flexible symbol is overridden by a downlink or uplink symbol, the terminal may perform a new operation instead of the existing operation in the corresponding flexible symbol (e.g., overridden flexible symbol).

In the present disclosure, an SSB may refer to a signal set including synchronization signals and/or a broadcast channel. The synchronization signals may include a PSS, SSS, etc., and the broadcast channel may include a physical broadcast channel (PBCH). The SSB may further include a reference signal. Reference signals (e.g., reference signal included in the SSB) include a demodulation reference signal (DM-RS) for decoding of the PBCH, CSI-RS, tracking reference signal (TRS), positioning reference signal (PRS), phase tracking reference signal (PT-RS), and the like. In the NR communication system, the SSB may refer to a synchronization signal/physical broadcast channel (SS/PBCH) block. SSBs may be transmitted periodically, and one or more SSB(s) may be transmitted repeatedly in one cycle.

A format of the unit time resource (hereinafter, 'slot format') may be configured semi-statically by higher layer signaling (e.g., radio resource control (RRC) signaling). Information indicating a semi-static slot format may be included in system information, and the semi-static slot format may be configured in a cell-specific manner. In addition, a semi-static slot format may be additionally configured for each terminal through terminal-specific higher layer signaling (e.g., RRC signaling). A flexible symbol of a slot format configured cell-specifically may be overridden by a downlink symbol or an uplink symbol by terminal-specific higher layer signaling. In addition, a slot format may be dynamically indicated by physical layer signaling (e.g., slot format indicator (SFI) included in downlink control information (DCI)). The semi-statically configured slot format may be overridden by a dynamically indicated slot format. For example, a semi-static flexible symbol may be overridden by a downlink symbol or an uplink symbol by SFI.

The terminal may perform downlink operations, uplink operations, and sidelink operations in a bandwidth part. A bandwidth part may be defined as a set of consecutive RBs (e.g., physical resource blocks (PRBs)) having a specific numerology in the frequency domain. One numerology may be used for transmission of signals (e.g., transmission of control channel or data channel) in one bandwidth part. In the present disclosure, when used in a broad sense, a 'signal' may refer to any physical signal and channel. A terminal performing an initial access procedure may obtain configuration information of an initial bandwidth part from the base station through system information. A terminal operating in an RRC connected state may obtain the configuration information of the bandwidth part from the base station through terminal-specific higher layer signaling.

The configuration information of the bandwidth part may include a numerology and/or an RB set applied to the bandwidth part. At least one bandwidth part among the bandwidth part(s) configured in the terminal may be activated. For example, within one carrier, one uplink bandwidth part and one downlink bandwidth part may be activated respectively. In a time division duplex (TDD) based communication system, a pair of an uplink bandwidth part and a downlink bandwidth part may be activated. The base station may configure a plurality of bandwidth parts to the terminal within one carrier, and may switch the active bandwidth part of the terminal.

In exemplary embodiments, 'a certain frequency band (e.g., carrier, bandwidth part, RB set, listen before talk (LBT) subband, guard band, etc.) is activated' may mean that the base station or terminal is in a state where signals can be transmitted and received using the frequency band. Further, 'a certain frequency band is activated' may mean that a radio frequency (RF) filter (e.g., band-pass filter) of a transceiver is in a state of operating including the frequency band.

In exemplary embodiments, an RB may mean a common RB (CRB). Alternatively, an RB may mean a PRB or a virtual RB (VRB). In the communication system (e.g., NR communication system), a CRB may refer to an RB constituting a set of consecutive RBs (e.g., common RB grid) based on a reference frequency (e.g., point A). Carriers, bandwidth parts, and the like may be arranged on the common RB grid. In other words, a carrier, bandwidth part, etc. may be composed of CRB(s). An RB or CRB constituting a bandwidth part may be referred to as a PRB, and a CRB index within the bandwidth part may be appropriately converted into a PRB index. In an exemplary embodiment, an RB may refer to an interlace RB (IRB).

A PDCCH may be used to transmit a DCI or DCI format to the terminal. A minimum resource unit constituting a PDCCH may be a resource element group (REG). An REG may be composed of one PRB in the frequency domain and one OFDM symbol in the time domain. A demodulation reference signal (DMRS) for demodulating a PDCCH may be mapped to some REs among REs constituting the REG, and control information (e.g., modulated DCI) may be mapped to the remaining REs. One PDCCH candidate may be composed of one CCE or aggregated CCEs. One CCE may be composed of a plurality of REGs. The NR communication system may support CCE aggregation levels 1, 2, 4, 8, 16, and the like, and one CCE may consist of 6 REGs.

A control resource set (CORESET) may be a resource region in which the terminal performs a blind decoding on PDCCHs. The CORESET may be composed of a plurality of REGs. The CORESET may consist of one or more RBs in the frequency domain and one or more symbols (e.g., OFDM symbols) in the time domain. The symbols constituting one CORESET may be consecutive in the time domain. The RBs constituting one CORESET may be consecutive or non-consecutive in the frequency domain. One DCI (e.g., one DCI formation, one PDCCH) may be transmitted within one CORESET. A plurality of CORESETs may be configured with respect to a cell and a terminal, and time/frequency resource regions to which the plurality of CORESETs are mapped may or may not overlap with each other.

A CORESET may be configured in the terminal during an initial access procedure. For example, a CORESET may be configured in the terminal by an initial access signal (e.g., a PBCH or system information transmitted on the PBCH). An identifier (ID) of the CORESET configured by the initial access signal may be 0. The CORESET configured by the initial access signal may be referred to as a CORESET 0. A terminal operating in the RRC idle state may perform a monitoring operation in the CORESET 0 in order to receive an initial PDCCH in the initial access procedure. Not only terminals operating in the RRC idle state but also terminals operating in the RRC connected state may perform monitoring operations in the CORESET 0. The CORESET may be configured in the terminal by other system information (e.g., system information block type 1 (SIB1)) other than the system information transmitted through the initial access signal (e.g., PBCH). For example, for reception of a random access response (or Msg2), the terminal may receive the SIB1 including the configuration information of the CORESET. The CORESET may be configured in the terminal by terminal-specific higher layer signaling (e.g., RRC signaling).

A search space may be a set of candidate resource regions in which PDCCHs can be transmitted. The terminal may perform a blind decoding on each of PDCCH candidates within a predefined search space or a search space configured by the base station. The terminal may determine whether a PDCCH is transmitted to itself by performing a cyclic redundancy check (CRC) on a result of the blind decoding. When it is determined that a PDCCH is a PDCCH for the terminal itself, the terminal may receive the PDCCH.

One or more search space(s) may constitute a search space set. The search space may be defined/configured for each CCE aggregation level, and the search space set may mean a search space for each CCE aggregation level or a sum of search spaces for all CCE aggregation levels. For each CCE aggregation level, a PDCCH candidate may consist of CCE(s) selected by a predefined hash function within the CORESET or search space occasion. In exemplary embodiments, 'search space set' may refer to 'search space'.

A search space set may be logically associated (e.g., combined) with one CORESET. One CORESET may be logically associated with one or more search space sets. A common search space set configured by the PBCH may be used to monitor a DCI that schedules a PDSCH for carrying the SIB1. An ID of the common search space set configured by the PBCH may be set to 0. In other words, the common search space set configured by the PBCH may be defined as a Type 0 PDCCH common search space set or search space set #0. The search space set #0 may be logically associated with the CORESET 0.

The search space sets may be classified into common search space sets and terminal-specific search space sets (i.e., UE-specific search space sets) depending on their purposes or operations of the terminal. A common DCI or a terminal-specific DCI (e.g., UE-specific DCI) may be transmitted in a common search space set, and a terminal-specific DCI may be transmitted in a terminal-specific search space set (e.g., UE-specific search space set). For example, the common DCI may include resource allocation information of a PDSCH including system information, paging messages, etc., power control command, slot format indicator (SFI), and/or preemption indicator. The terminal-specific DCI may include resource allocation information of a PDSCH and/or resource allocation information of a PUSCH. A plurality of DCI formats may be defined depending on the purposes, and the plurality of DCI formats may be distinguished by the terminal by a DCI payload, DCI field, DCI size, and/or radio network temporary identifier (RNTI).

In the present disclosure, a common search space may be referred to as a CSS, and a common search space set may be referred to as a CSS set. A terminal-specific search space may be referred to as a UE-specific search space (USS), and a terminal-specific search space set may be referred to as a USS set.

The terminal may assume that a PDCCH DM-RS has a quasi-co-location (QCL) relationship with a certain signal (e.g., SSB, CSI-RS, PDSCH DM-RS, PDCCH DM-RS, etc.). The PDCCH DM-RS may refer to a DM-RS used for modulation and/or demodulation of a PDCCH. The PDSCH DM-RS may refer to a DM-RS used for modulation and/or demodulation of a PDSCH. Since the PDCCH has the same antenna port as the PDCCH DM-RS, the PDCCH and the PDCCH DM-RS may have a QCL relationship. Through the QCL assumption, the terminal may obtain information on large-scale propagation characteristics of a wireless channel experienced by the PDCCH and the PDCCH DM-RS and may utilize the large-scale propagation characteristics of the wireless channel for channel estimation and reception beamforming. QCL parameters may include at least one of delay spread, Doppler spread, Doppler shift, average gain, average delay, or spatial reception (Rx) parameters. The spatial reception parameters may correspond to at least one of a reception beam, a reception channel spatial correlation, or a pair of transmission and reception beams. The spatial reception parameters may be referred to as 'spatial QCL'. The PDCCH may be used in a sense that includes the PDCCH DM-RS. The statement that a PDCCH has a QCL relationship with a certain signal may include a meaning that a DM-RS of the PDCCH has a QCL relationship with the certain signal. A signal having a QCL relationship with a PDCCH or a resource of the signal may be referred to as a QCL source, a QCL source signal, or a QCL source resource.

PDCCHs transmitted in the same CORESET (e.g., search space sets, PDCCH monitoring occasions, etc. corresponding to the same CORESET) may have the same QCL relationship. In other words, a unit for which the terminal assumes the same QCL may be a CORESET, and QCL assumption may be independent for each CORESET. In exemplary embodiments, a QCL and a QCL source of a certain CORESET may refer to a QCL and a QCL source of a PDCCH received through the corresponding CORESET, respectively. Exceptionally, different QCL assumptions may be applied to search space sets corresponding to a single CORESET. For example, a search space set (e.g., Type 1 CSS set) for monitoring a random access (RA)-RNTI and a search space set other than the aforementioned search space set may have different QCL relationships.

A QCL relationship or QCL assumption (e.g., QCL source, QCL type, etc.) of a CORESET may be determined by a predefined method. For example, the terminal may assume that a PDCCH DM-RS received through a certain CORESET or a certain search space set has a QCL relationship with an SSB and/or CSI-RS selected in an initial access or random access procedure for a predefined QCL type. The QCL type may refer to a set of one or more QCL parameters. A QCL relationship or QCL assumption (e.g., QCL source, QCL type, etc.) of a CORESET may be signaled by base station to the terminal (e.g., through RRC signaling, MAC control element (CE) signaling, DCI signaling, or a combination thereof). In other words, the base station may configure a transmission configuration indication (TCI) state for the CORESET in the terminal. Generally, a TCI state may include at least one of an ID of a signal (e.g., a QCL source or QCL source resource of a PDCCH DM-RS) having a QCL relationship with a DM-RS of a physical channel (e.g., the PDCCH DM-RS) to which a TCI is applied or a QCL type for the signal. For example, the base station may configure one or more TCI state candidates for each CORESET through RRC signaling and may indicate (e.g., configure) one of the TCI state candidates to be used for CORESET monitoring of the terminal through MAC signaling (or DCI signaling). If only one TCI state candidate is configured through RRC signaling, the MAC signaling procedure (or DCI signaling procedure) may be omitted. The terminal may perform PDCCH monitoring and reception operations for the corresponding CORESET based on the TCI state configuration information received from the base station.

In the present disclosure, a TCI state may be referred to as a TCI for convenience. While a TCI generally refers to a broad concept that includes a beam or signaling information related to the beam, in the present disclosure, it may be used in a sense corresponding to a beam. A downlink TCI or a TCI for receiving a downlink signal may correspond to a reception beam, whereas an uplink TCI or a TCI for transmitting an uplink signal may correspond to a transmission beam. The transmission beam may refer to spatial relation information, a transmission spatial filter, or the like.

The present disclosure relates to a method for improving power efficiency in a communication system. In other words, the present disclosure may relate to a method for improving power efficiency of a network. A base station in an idle state may minimize transmission of system information and may maximize a sleep time. Exemplary embodiments of the present disclosure may be applied to communication systems (e.g., 4G communication systems (e.g., LTE communication systems), 5G communication systems (e.g., NR communication systems), 6G communication system, etc.).

A terminal may perform an SSB reception operation to camp on or initially access a cell. The terminal may assume that SSBs are transmitted at a default periodicity (e.g., 20ms) during an initial cell search process. The terminal may receive configuration of an SSB periodicity value through system information or an RRC message after the initial cell search process. In an NR communication system, a maximum SSB periodicity may be 160ms. Within one period, a plurality of SSBs may be repeatedly transmitted using multiple beams, and the terminal may receive (e.g., attempt to receive) a plurality of SSBs based on different reception beams (e.g., different QCL assumptions). The terminal may select one SSB having the best reception quality among one or more SSBs, and may perform subsequent transmission and reception procedures based on the selected SSB (e.g., a resource, beam, QCL assumption, etc. of the selected SSB). The terminal may acquire some system information through the SSB. For example, the SSB may include a PBCH as one component, and the terminal may acquire a master information block (MIB) by receiving the PBCH.

The terminal may receive additional system information (e.g., SIB1, SIB) from the base station in addition to the some system information (e.g., MIB). For example, the terminal may monitor and receive a PDCCH including scheduling information of a PDSCH in a PDCCH search space set, and may receive a PDSCH including an SIB (e.g., SIB1). Similarly or identically to the SSB transmission, the additional system information (e.g., SIB1, SIB) may be periodically transmitted. For example, the SIB1 may be transmitted at a periodicity of 160ms, and the SIB1 may be repeatedly transmitted multiple times within each period. A periodicity of SIB1 transmission including repeated transmissions may be identical to the periodicity of the SSB transmission. The exemplary embodiment may indicate that the terminal monitors a CORESET (hereinafter referred to as a 'first CORESET') to which the PDCCH search space set is mapped with the same periodicity as the SSB. For example, the first CORESET may be a CORESET 0, and the PDCCH search space set associated with the CORESET 0 may be a Type 0 PDCCH CSS set.

The first CORESET and/or the PDCCH search space configured may be configured through the some system information (e.g., MIB). For example, the MIB may include configuration information of the CORESET 0 and the Type 0 PDCCH CSS set, and a PDCCH may be monitored in the Type 0 PDCCH CSS set. Since the SIB is cell-specific information, configuration information for the SIB may be included in a common DCI (e.g., DCI format 1_0), and the common DCI may be transmitted through the PDCCH. The common DCI may have a CRC scrambled by an RNTI (e.g., system information (SI)-RNTI) predefined in the technical specifications. The PDCCH and/or the PDSCH may be received based on a QCL relationship with the received SSB.

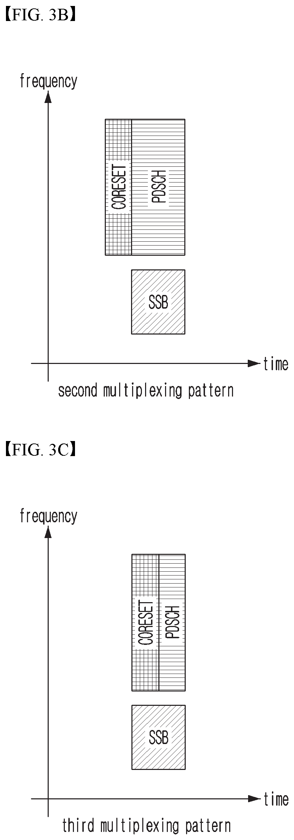

FIG. 3A is a conceptual diagram illustrating a first multiplexing pattern of an SSB and a CORESET, FIG. 3B is a conceptual diagram illustrating a second multiplexing pattern of an SSB and a CORESET, and FIG. 3C is a conceptual diagram illustrating a third multiplexing pattern of an SSB and a CORESET.

Referring to FIGS. 3A to 3C, an SSB and a CORESET may be multiplexed in several forms. The CORESET may refer to the first CORESET or an SIB1 CORESET. The SIB1 CORESET may be a CORESET in which a PDCCH for scheduling SIB1 transmission is transmitted and received. In the exemplary embodiment of FIG. 3A, the CORESET may be time-division multiplexed (TDMed) with the SSB corresponding to the CORESET. A PDSCH including the SIB1 may be multiplexed with the SSB corresponding to the PDSCH based on one of TDM, frequency-division multiplexing (FDM), or a combination of TDM and FDM. The above-described multiplexing pattern may be referred to as a first multiplexing pattern. In the exemplary embodiment of FIG. 3B, the CORESET may be TDMed with the SSB corresponding to the CORESET, and the SIB1 PDSCH may be FDMed with the SSB corresponding to the SIB1 PDSCH. In other words, the CORESET may be mapped to symbols different from those of the SSB, and the SIB1 PDSCH may be mapped to the same symbols as those of the SSB. The above-described multiplexing pattern may be referred to as a second multiplexing pattern. The SIB1 PDSCH may refer to a PDSCH on which the SIB1 is transmitted and received. In the exemplary embodiment of FIG. 3C, the CORESET and the SIB1 PDSCH may be FDMed with the SSBs corresponding to the CORESET and the SIB1 PDSCH. In other words, the CORESET and the SIB1 PDSCH may be mapped to the same symbols as those of the SSB. The above-described multiplexing pattern may be referred to as a third multiplexing pattern. The multiplexing pattern supported by the terminal may differ depending on a frequency band or a subcarrier spacing applied to the SSB and the CORESET. The first multiplexing pattern may be used for a wider frequency range and/or various subcarrier spacings compared to the second multiplexing pattern and the third multiplexing pattern.

Meanwhile, the number of terminals camped on or connected to a cell may vary depending on a service area or time zone. For example, during night hours when employees have left an indoor office, there may be no terminals camped on a cell (e.g., base station) corresponding to an area of the indoor office. A state of the base station or the cell may be referred to as an idle state for convenience. According to the above-described method, the base station may need to periodically transmit SSBs as well as additional system information (e.g., SIB1) even in the idle state. In particular, when the SIB1 CORESET is configured based on the first multiplexing pattern, the base station needs to stay awake for a longer time for the transmission of SIB1, and such an operation may cause an unnecessary increase in power consumption of the base station. This scenario may be referred to as a single-cell scenario or a first scenario for convenience. In the first scenario, the cell may form a unique coverage that does not overlap with a coverage of another cell. The terminal may have difficulty in performing communication with another serving cell within the coverage of the cell.

On the other hand, coverages of a plurality of cells may overlap. For example, in a heterogeneous network (HetNet) environment including a macro cell and a small cell, a coverage of the macro cell may overlap with a coverage of the small cell. The macro cell may serve as an anchor cell that provides stable coverage over a wide area. The small cell may be deployed within the coverage of the macro cell and may be used for a purpose of performance enhancement through offloading and/or multi-TRP cooperative transmission. The coverage of the small cell may overlap with the coverage of the macro cell. When there are no terminals camped on or connected to the small cell, periodic SIB1 transmission by the small cell may cause unnecessary power consumption. Unlike the first scenario, a terminal located within the small cell coverage or a terminal attempting to enter the small cell coverage may have a possibility to perform communication not only with the small cell but also with the macro cell. In the above-described sense, the scenario may be referred to as a multi-cell scenario or a second scenario for convenience.

Based on the above-described scenarios, the present disclosure proposes methods for reducing power consumption by minimizing system information transmission by a base station or cell in the idle state. According to the proposed method, the base station may suspend or omit an operation of transmitting system information within a cell when a predetermined condition is satisfied. The predetermined condition may include a case in which it is determined that there is no terminal camped on or connected to the cell. Based on the above-described operation, the cell may omit an operation of waking up from a sleep mode to transmit system information, and may reduce power consumption by maximizing a duration of operating in the sleep mode. When a terminal enters a coverage of the cell in a period during which the cell does not transmit system information, the terminal may request or trigger transmission of system information from the cell (e.g., the base station controlling the cell) in order to receive the system information. In other words, the system information of the cell may be transmitted in a non-periodic manner based on the request of the terminal. The above-described method may be referred to as a method of transmitting on-demand system information.

In the present disclosure, system information may primarily refer to the SIB1, and the proposed method may be referred to as an on-demand SIB1 transmission method. Methods according to exemplary embodiments of the present disclosure may be similarly or identically applied not only to the SIB1 but also to other system information (e.g., other SIBs excluding SIB1, SIBx, other system information (OSI), MIB, etc.) or other DL signals (e.g., SSB, CSI-RS, etc.). x may be a natural number. In the exemplary embodiments of the present disclosure, an on-demand transmission signal described as SIB1 is merely an example, and it may also be interpreted as other system information (e.g., MIB, SIBx, OSI, etc.) or other DL signals (e.g., SSB, CSI-RS, etc.) rather than SIB1. For example, the terminal may trigger SSB transmission in the base station or cell based on the method described in the present disclosure, and may perform an operation of receiving the SSB transmitted based on the trigger and an operation subsequent to the reception of the SSB. In the present disclosure, the terminal performing communication with the base station may refer to a terminal in the RRC idle mode or RRC inactive mode, but the proposed methods may be similarly or identically applied to a terminal in other states (e.g., a terminal in the RRC connected mode).

In the present disclosure, a base station may refer to a base station that controls cell(s) or cell(s) included in the base station. A cell may refer to a cell included in a base station or a base station including the cell (e.g., base station managing the cell). For example, transmission and reception of a signal between a terminal and a cell may indicate transmission and reception of a signal between the terminal and a base station including the cell. The cell may refer to a cell performing communication with the terminal, a cell on which the terminal is camped, or a cell to which the terminal is attempting initial access. For a terminal in the RRC idle/inactive mode, the cell may refer to a cell on which the terminal is camped or a cell on which the terminal may be camped. For a terminal in the RRC connected mode, the cell may refer to a serving cell, a neighboring cell, a cell for performing radio resource management (RRM), a cell to which the terminal is connected, a cell for which the terminal maintains the connected state, or a carrier.

In exemplary embodiments of the present disclosure, a cell performing an on-demand SIB1 operation (e.g., on-demand SIB1 transmission operation) may be a cell operating in a low-power mode, and the cell performing the on-demand SIB1 operation may be referred to as a network energy saving (NES) cell for convenience. When a plurality of cells exist, a first cell may refer to a cell not operating in the low-power mode (e.g., anchor cell), and a second cell may refer to a cell operating in the low-power mode (e.g., NES cell). The cell not operating in the low-power mode (e.g., the first cell) may periodically transmit system information, and the on-demand SIB1 operation may not be applied to the first cell. The first cell and the second cell may belong to the same base station. Alternatively, the first cell and the second cell may belong to different base stations. In the second scenario, a cell providing an overlapping coverage with the NES cell and not performing a low-power operation may be referred to as an anchor cell. For example, the anchor cell may periodically transmit an SSB, SIB1, and the like. In the present disclosure, the fact that the anchor cell (e.g., base station) periodically transmits an SSB, SIB1, etc. may imply that the terminal performs an operation of periodically monitoring the SSB, SIB1, etc. The base station may omit SSB transmission in a periodically-configured SSB resource as needed. The base station may omit SIB1 transmission in a periodically-configured SIB1 resource as needed. A terminal performing the operation described in the present disclosure may be referred to as an NES terminal for convenience.

### [Method for identifying whether SIB1 transmission is performed]

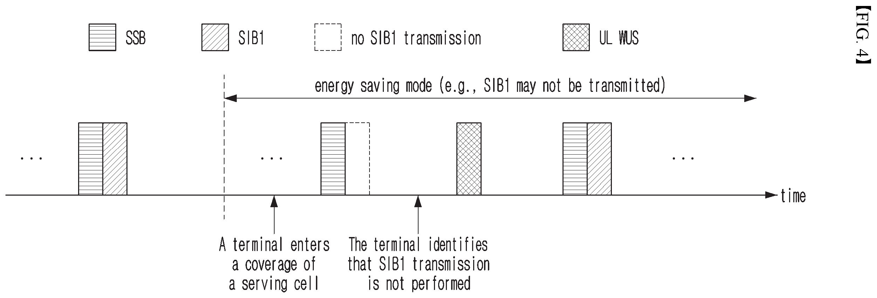

FIG. 4 is a conceptual diagram illustrating a first exemplary embodiment of an on-demand SIB1 transmission method.

Referring to FIG. 4, a base station may periodically transmit SSB in a certain cell. The base station may periodically transmit SIB1 along with the SSB in the cell according to the above-described method, and from a certain time, the base station may omit SIB1 transmission and may operate in a low-power mode. In other words, the cell may operate in the low-power mode. As another method, the base station may omit SIB1 transmission in the cell from a time of turning on the cell and may operate the cell in the low-power mode.

In a duration during which the cell operates in the low-power mode, a terminal may enter a coverage of the cell. The terminal may be a terminal entering the coverage of the cell due to its mobility. Alternatively, the terminal may be a terminal that attempts to camp on the cell for the first time after turning on its power within the coverage of the cell. The terminal entering the cell may receive SSB and may perform a procedure for identifying whether SIB1 is being transmitted in the cell. When the terminal determines that SIB1 is not being transmitted, the terminal may trigger SIB1 transmission in the cell. In other words, when it is determined that the cell does not periodically transmit SIB1, the terminal may trigger SIB1 transmission in the cell.

In the present disclosure, the operation of the terminal identifying whether SIB1 is being transmitted may be replaced by a similar operation. For example, when the base station instructs the terminal to perform an SIB1 trigger operation for the cell, the terminal may trigger SIB1 transmission in the cell based on the instruction. The SIB1 trigger operation may refer to an operation that triggers SIB1 transmission. As another example, when the base station transmits information to the terminal indicating that an SIB1 trigger operation for the cell is permitted, the terminal may trigger SIB1 transmission in the cell based on the information. The SIB1 trigger operation (e.g., SIB1 transmission trigger operation) may correspond to an uplink wake-up signal (UL WUS) transmission operation, which will be described later. In other words, a signal indicating an SIB1 trigger operation may be an uplink WUS. The UL WUS may be referred to as a WUS for convenience. The terminal may implicitly determine whether the cell performs SIB1 transmission based on signaling of the base station (e.g., signaling message(s) of cell(s) belonging to the base station). The signaling operation of the base station and/or an SIB1 transmission operation corresponding to the signaling operation may be performed regardless of whether the cell transmits SIB1. For example, even if the cell periodically transmits SIB1, the terminal may trigger SIB1 transmission in the cell.

As a method for identifying whether the NES cell transmits SIB1, the terminal may receive a signaling message from the base station. The signaling message may include a signaling message of the NES cell and/or a signaling message of another cell (e.g., anchor cell). For example, the signaling message may be included in an MIB. The MIB may be an MIB of the NES cell, and the MIB may be transmitted to the terminal from the NES cell. The terminal may receive a PBCH from the base station (e.g., NES cell) and may identify whether the NES cell transmits SIB1 based on a specific field of the MIB included in the PBCH. To support the above-described operation, a specific field of the MIB, a usage of which has already been defined, may be reused for the purpose of indicating whether SIB1 is transmitted.

For example, the MIB may include a field indicating PDCCH resources (e.g., CORESET, search space set, PDCCH monitoring occasions, etc.) required for initial access. The terminal may reinterpret codepoint(s) or bit value(s) of some bit(s) in the field as information indicating whether SIB1 is transmitted. For example, among the codepoint(s) of the field, a usage of a codepoint(s) indicating that SIB1 corresponding to the SSB does not exist and/or a codepoint(s) indicating a frequency location of a neighboring synchronization raster where the SSB exists may be changed to indicate whether SIB1 is transmitted. In a similar manner, when the field is set to a codepoint indicating that SIB1 does not exist, the terminal may regard that SIB1 is not being transmitted in the NES cell. In the present disclosure, indicating that SIB1 corresponding to the SSB does not exist may mean that a CORESET 0 and/or a Type 0-PDCCH CSS set corresponding to the SSB does not exist. The codepoints indicating that SIB1 corresponding to the SSB does not exist may include a first codepoint and a second codepoint. The first codepoint may refer to a codepoint indicating a frequency location of a neighboring synchronization raster in which the SSB corresponding to SIB1 is transmitted, and the second codepoint may refer to a codepoint indicating that the SSB corresponding to SIB1 (or SIB1 corresponding to the SSB) does not exist within a certain frequency range. A terminal that determines that the NES cell does not transmit SIB1 may regard the NES cell as operating in the low-power mode and may omit or suspend an operation of searching a synchronization raster in the NES cell. As another method, a usage of LSB(s) or MSB(s) of the field may be changed to indicate whether SIB1 is transmitted. The terminal may identify whether SIB1 is transmitted in the NES cell based on the codepoint(s) with the changed usage or the bit(s) with the changed usage.

As another example, the MIB may include a field indicating a frequency offset (e.g., the number of subcarriers) between an SSB and an RB grid (or RB boundary). For example, the frequency offset may be a frequency offset between an SSB transmitted by the NES cell (e.g., an RB with the lowest index, a central RB, or an RB with the highest index, which is occupied by the SSB) and the RB boundary of the NES cell. A signaling message transmitted by the NES cell may include the frequency offset (e.g., the field and/or a codepoint of the field indicating the frequency offset). Similarly or identically to the above-described exemplary embodiment, the terminal may reinterpret a codepoint(s) or a bit value(s) of some bit(s) in the field as information corresponding to an indication on whether SIB1 is transmitted. In other words, a legacy terminal may interpret the field according to the existing usage, and an NES terminal may interpret the field according to the above-described method. A terminal operation for a first value (e.g., 30 or 14) of the field may not be defined. Alternatively, the field may be set to a second value (e.g., 24~30 or 12~14), and the terminal may identify a value of a frequency (e.g., global synchronization channel number (GSCN)) to which a cell-defining SSB (CD-SSB) is mapped based on the second value. When the field is set to the first value or the second value, the NES terminal may regard that the corresponding serving cell (e.g., the NES cell) does not transmit SIB1. When the field is set to a third value (e.g., 31 or 15), the NES terminal may regard that the corresponding serving cell (e.g., the NES cell) does not transmit SIB1. The SIB1 may be a periodically transmitted SIB1 or a regular SIB1. The SIB1 may be an SIB1 other than an on-demand SIB1.

According to the above-described method, restrictions may exist regarding some configurations through the MIB. For example, when a field indicating PDCCH resources for initial access and/or a field indicating the frequency offset between the SSB and the RB grid (or RB boundary) is used to indicate whether SIB1 is transmitted, indications of some codepoint(s) of the field(s) (e.g., codepoint(s) reinterpreted for indicating whether SIB1 is transmitted) may no longer be valid for the terminal. For example, a terminal that identifies whether SIB1 is transmitted through the field(s) may not expect the field(s) to indicate that SIB1 does not exist or to indicate a frequency location of a neighboring synchronization raster. Conversely, a terminal that identifies whether SIB1 does not exist or identifies a frequency location of a neighboring synchronization raster through the field(s) may not expect the field(s) to indicate whether SIB1 is transmitted. As another example, a terminal (e.g., NES terminal) that identifies whether SIB1 is transmitted through the field indicating the frequency offset between the SSB and the RB grid (or the RB boundary) may receive an indication of a frequency offset within a reduced range compared to a terminal (e.g., legacy terminal) that does not identify whether SIB1 is transmitted through the field. In other words, some frequency offset values may not be valid for the NES terminal.

As another method, spare bit(s) included in the MIB may be used to indicate whether SIB1 is transmitted. The spare bit(s) may include information indicating whether SIB1 is transmitted, and the terminal may identify whether SIB1 is transmitted based on the spare bit(s). The spare bit(s) may be configured as one bit. Alternatively, information on whether SIB1 is transmitted may be transmitted to the terminal through a component (e.g., PSS, SSS, PBCH DM-RS, PBCH payload, etc.) of the PBCH other than the MIB. In the present disclosure, the procedure of transmitting information to the terminal through the MIB may be interpreted in a broad sense to include the procedure of transmitting information to the terminal through a PBCH payload or a PBCH DM-RS.

The field/codepoint/bit of the MIB whose usage is changed by the above-described method may be used (e.g., indicated to the NES terminal) for the above-described purpose in a duration during which SIB1 (e.g., periodic SIB1, SIB1 other than on-demand SIB1) is not transmitted. A field/codepoint/bit of the MIB whose usage is not changed by the above-described method may be used (e.g., indicated to the NES terminal and the legacy terminal) in a duration during which SIB1 (e.g., periodic SIB1, SIB1 other than on-demand SIB1) is transmitted. The method based on the spare bit(s) may be regarded as a method in which the usage of the spare bit(s) is changed.

The signaling message may include explicit information. For example, a certain codepoint or a certain bit value (e.g., '1') may correspond to information indicating that SIB1 is transmitted, information indicating to receive SIB1, etc. Conversely, another codepoint or another bit value (e.g., '0') may correspond to information indicating that SIB1 is not transmitted, information indicating not to receive SIB1, etc. Alternatively, the signaling message may include implicit information. For example, a certain codepoint or a certain bit value may provide information required for the terminal to determine whether a UL WUS resource, which will be described later, exists (e.g., whether the UL WUS resource is valid, whether the UL WUS resource is activated). As another example, a certain codepoint or a certain bit value may provide the terminal with information required to determine whether a DL signal (e.g., PDCCH or PDSCH) including configuration information of a UL WUS resource is transmitted or whether the DL signal is to be monitored. The terminal may identify whether SIB1 is transmitted in the cell by an implicit method based on the information. For example, presence of a UL WUS resource in the cell (e.g., the UL WUS resource being valid, or the UL WUS resource being activated) may be interpreted as indicating that SIB1 is not transmitted in the cell. The transmission of the DL signal (e.g., PDCCH, PDSCH, or system information) for configuring a UL WUS resource of the cell, or successful reception of the DL signal, may be interpreted as indicating that SIB1 is not transmitted in the cell. The DL signal may be transmitted from the cell (e.g., NES cell) or from a neighboring cell (e.g., anchor cell).

As another method for identifying whether SIB1 is transmitted, the terminal may perform a blind detection operation (e.g., decoding operation) on a PDSCH including SIB1 (hereinafter referred to as 'SIB1 PDSCH') and/or a PDCCH scheduling the SIB1 PDSCH (hereinafter referred to as 'SIB1 PDCCH'), and may determine whether SIB1 is transmitted based on whether the signal is detected. The blind detection operation may be performed based on a rule predefined in the technical specifications or a rule configured by the base station. For example, a time resource (e.g., a time window, slots, or symbols) in which the terminal monitors the SIB1 PDCCH and/or the SIB1 PDSCH, the number of blind detection attempts, and/or the number of blind detection failures may be predefined or configured. The above-described operation may be performed for the NES cell. The terminal may perform a blind detection operation (e.g., decoding operation) for other signals unrelated to SIB1 reception. For example, the terminal may monitor a PDCCH/PDSCH other than the SIB1 PDCCH/SIB1 PDSCH in the Type 0 PDCCH CSS set, and when another PDCCH/PDSCH is successfully received, the terminal may determine that SIB1 is not transmitted in the corresponding cell. The another PDCCH may be a PDCCH including UL WUS configuration information. Alternatively, the another PDCCH may be a PDCCH scheduling a PDSCH including the UL WUS configuration information. The another PDSCH may be a PDSCH including the UL WUS configuration information. Additionally to or alternatively from the above-described exemplary embodiment, the another PDCCH may include a PDCCH having a CRC scrambled by an RNTI other than SI-RNTI, a PDCCH having a DCI format other than DCI format 1_0, or the like. The another PDCCH may be monitored in the same search space set as the SIB1 PDCCH. For example, the another PDCCH may be monitored in the Type 0 PDCCH CSS set. The another PDSCH may be a PDSCH scheduled by the PDCCH. The above-described operation may be performed for the NES cell or a neighboring cell (e.g., anchor cell). For example, the terminal may receive the PDSCH and/or another PDSCH including the UL WUS configuration information from the neighboring cell, and may determine that SIB1 is not transmitted in the NES cell based on the UL WUS configuration information. The UL WUS configuration information may include explicit information on whether SIB1 is transmitted in the NES cell.

The above-described method may be considered in both the first scenario and the second scenario. In the second scenario, information on whether SIB1 is transmitted in the NES cell may be signaled to the terminal from the anchor cell. For example, system information transmitted by the first cell (e.g., anchor cell) may include information on whether SIB1 is transmitted in the second cell (e.g., NES cell) which is the neighboring cell. As described above, the information on whether SIB1 is transmitted may correspond to the UL WUS configuration information. The system information may be SIB1. Alternatively, the system information may be an MIB or SIBx (x=2, 3, 4, ...). Alternatively, the system information may be system information separately defined in addition to SIB. The system information may be transmitted to the terminal on a PDCCH and/or a PDSCH. The information on whether SIB1 is transmitted in the second cell (e.g., NES cell) may be transmitted to the terminal together with information on a cell ID of the second cell. The terminal may acquire the cell ID in the process of receiving an SSB of the second cell, and after identifying that the acquired cell ID matches a cell ID received as a part of the system information, may determine whether SIB1 is transmitted in the second cell. The cell ID may refer to a physical cell ID or a temporary identifier of the cell (e.g., temporary mobile subscriber identity (TMSI)).

The above-described methods may be implemented in combination. The terminal may identify whether SIB1 is transmitted in the NES cell and/or whether to transmit a UL WUS for the NES cell based on a plurality of signaling procedures. The plurality of signaling procedures may include at least a first signaling procedure and a procedure for signaling MIB to the terminal. The first signaling procedure may refer to a procedure for signaling the UL WUS configuration information and/or information on whether SIB1 is transmitted to the terminal. According to an exemplary embodiment, the first signaling procedure may be performed for the neighboring cell, and the MIB signaling procedure may be performed for the NES cell. According to another exemplary embodiment, both of the signaling procedures may be performed for the NES cell.

A first signaling message transmitted by the anchor cell may include information on whether SIB1 is transmitted in the NES cell and/or whether to transmit a UL WUS for the NES cell, and a second signaling message transmitted by the NES cell may include information on whether SIB1 is transmitted in the NES cell and/or whether to transmit a UL WUS for the NES cell. The terminal may receive at least one of the first signaling message and the second signaling message, and may determine whether SIB1 is transmitted in the NES cell and/or whether to transmit a UL WUS for the NES cell based on the information included in the at least one message.

Whether the above-described reinterpretation method of a specific field of the MIB is applied may be determined based on whether the terminal has received UL WUS configuration information (or information on whether SIB1 is transmitted). For example, when the terminal has received the UL WUS configuration information, the terminal may reinterpret specific codepoint(s) or bit(s) of the MIB based on the above-described method, and when the terminal has not received the UL WUS configuration information, the terminal may apply a conventional interpretation method to the codepoint(s) or bit(s). In other words, the reception operation of the SSB or the MIB in the NES cell may be performed based on the operation of receiving an SIB from the neighboring cell.

As another example, the first signaling procedure may refer to an MIB signaling procedure. According to an exemplary embodiment, information on whether SIB1 is transmitted may be signaled to the terminal based on both the spare bit(s) and the existing field of the MIB. Whether the above-described reinterpretation method of a specific field of the above-described MIB is applied may be indicated by the spare bit(s) of the MIB. In other words, the terminal may or may not reinterpret the existing field of the MIB in the above-described manner depending on the value of the spare bit(s).

When it is indicated that SIB1 is not transmitted in the NES cell by the above-described method, the MIB included in the SSB transmitted from the NES cell may not indicate the CORESET #0 and/or Type 0-PDCCH CSS set corresponding to the SSB. For example, the terminal may ignore fields indicating the CORESET #0 and/or Type 0-PDCCH CSS set in the MIB. In this case, the terminal may receive an SIB1 of the NES cell from the neighboring cell and may identify configuration of a CORESET #0 and/or Type 0-PDCCH CSS set of the NES cell through the SIB1. Alternatively, even when it is indicated by the above-described method that SIB1 is not transmitted in the NES cell, the terminal may still receive configuration of the CORESET #0 and/or Type 0-PDCCH CSS set through the MIB. Some information required to determine resource locations of the CORESET #0 and/or the Type 0-PDCCH CSS set may be transmitted from the neighboring cell to the terminal. For example, a frequency location of the CORESET #0 may be determined by a frequency offset (e.g., the number of subcarriers) between the SSB and the RB grid (or RB boundary), and the frequency offset (e.g., the number of subcarriers) between the SSB and the RB grid (or RB boundary) may be transmitted to the terminal through a signaling message from the neighboring cell, not the MIB of the NES cell. For example, the signaling message may be a message including system information of the neighboring cell, a message including the UL WUS configuration information of the NES cell, or the like. The terminal may perform a PDCCH monitoring operation for receiving a DL signal including the SIB1, Msg2, and the like in the search space set.

The information on whether SIB1 is transmitted (or, indication of an SIB1 trigger operation, indication of UL WUS transmission, whether an SIB1 trigger operation is allowed, or whether UL WUS transmission is allowed), acquired through the above-described method, may be valid for a predetermined time duration. The valid time duration may refer to a time duration during which UL WUS transmission of the terminal is allowed or a time duration during which UL WUS transmission of the terminal is not allowed. Additionally to or alternatively from the above-described exemplary embodiment, the valid time duration may refer to a time duration during which the terminal assumes that SIB1 is transmitted or a time duration during which the terminal assumes that SIB1 is not transmitted. For example, information on the time duration during which SIB1 is transmitted and/or the time duration during which SIB1 is not transmitted may be included in a signaling message transmitted from the base station to the terminal. The time duration may be represented by SSB period(s), SIB1 transmission period(s), or SIB1 PDCCH monitoring period(s). The time duration may be determined based on a time when terminal acquires the signaling message. For example, the time duration may include a predetermined number of period(s) from an SSB/SIB1 period to which a slot or symbol belongs, in which the terminal acquires the signaling message (e.g., MIB, SIB1, SIBx, other system information, etc.), or from a next period of the SSB/SIB1 period. The predetermined number of period(s) may be predefined in the technical specifications. Alternatively, the predetermined number of period(s) may be included in the signaling message. As another method, a start point and/or duration of the time duration may be determined based on a certain reference time (e.g., a specific system frame number (SFN), a specific radio frame, etc.). The reference time may be determined based on the time when the terminal receives the signaling message. For example, the reference time may refer to a most recent reference time prior to the time when the terminal receives the signaling message. The time duration may be determined by a timer operation. For example, the terminal may activate a timer in a slot, symbol, or SSB/SIB1 period in which the terminal receives the signaling message, and in a time duration during which the timer operates, reception of SIB1 may be regarded as valid or invalid. The value of the timer may be decreased (e.g., by one) per slot, symbol, or SSB/SIB1 period, and the timer may expire when the value of the timer becomes 0. As another method, the terminal may continuously apply the acquired information on whether SIB1 is transmitted until the terminal acquires an additional signaling message (e.g., until the signaling message is updated).

After the valid time elapses, the terminal may perform an operation of identifying again whether SIB1 is transmitted. If the terminal fails to acquire information on whether SIB1 is transmitted (or, indication of an SIB1 trigger operation, indication of UL WUS transmission, whether an SIB1 trigger operation is allowed, or whether UL WUS transmission is allowed), the terminal may regard the corresponding cell (e.g., NES cell) as a barred cell and may not attempt connection with or camping on the cell. For example, when the terminal performs a cell selection or reselection operation, the cell may be excluded from candidate cells. Alternatively, when the terminal fails to acquire information on whether SIB1 is transmitted (or, indication of an SIB1 trigger operation, indication of UL WUS transmission, whether an SIB1 trigger operation is allowed, or whether UL WUS transmission is allowed), the terminal may assume by default that the corresponding cell (e.g., NES cell) does not transmit SIB1, and may attempt UL WUS transmission for the cell.

Meanwhile, the terminal that receives information on whether SIB1 is transmitted (or, indication of an SIB1 trigger operation, indication of UL WUS transmission, whether an SIB1 trigger operation is allowed, or whether UL WUS transmission is allowed) may regard the corresponding cell (e.g., NES cell) as being not barred. In this case, indication information on whether access to the cell is barred may be ignored. For example, even if the cell is indicated as being barred by the MIB (e.g., access barring bit included in the MIB) transmitted from the cell or by an SIB for the cell (e.g., access barring bit included in the SIB1), the terminal may ignore the indication information and may regard the cell as being not barred. According to the above-described method, it may not be necessary to define a separate cell access barring message for a NES terminal, and the above-described information may be regarded as a cell access barring message for the NES terminal. According to the above-described method, the base station may allow the NES terminal to access the NES cell using the existing cell access barring message, while barring a legacy terminal from accessing the NES cell.

### [Configuration method of UL WUS]

When it is determined by the above-described method that SIB1 is not transmitted in a cell, the terminal may request SIB1 to be transmitted in the cell. The terminal may trigger SIB1 transmission by transmitting a UL signal to the cell. The UL signal may be referred to as a WUS in the sense that the signal triggers an operation in which the base station (e.g., the cell) exits a low-power mode. The UL signal may be referred to as a UL WUS for distinction from a DL WUS. The UL signal may be referred to as a term other than UL WUS. The cell may be an NES cell. The terminal may transmit a UL WUS to the cell (e.g., NES cell). Alternatively, the terminal may transmit the UL WUS to another cell (e.g., anchor cell) rather than the cell. In the present disclosure, an operation in which the terminal transmits the UL WUS to the NES cell will mainly be assumed, but the proposed method may be applied not only to the NES cell but also to another cell (e.g., arbitrary cell).

Hereinafter, methods for signaling configuration information of UL WUS (e.g., UL WUS configuration information) to the terminal will be described. The UL WUS configuration information may include information indicating a UL WUS resource. The UL WUS configuration information may further include additional information defining a UL WUS transmission operation of the terminal. The UL WUS configuration information may be referred to as WUS configuration information for convenience.

In the first scenario, since an operation in which the terminal transmits a UL WUS needs to be performed before the terminal receives SIB1, a resource configured by the conventional SIB1 (e.g., a PRACH resource configured by the SIB1) may not be suitable for use for the UL WUS. Therefore, the UL WUS configuration information may be transmitted to the terminal through a separate signaling procedure. For example, the UL WUS configuration information may be dynamically transmitted to the terminal based on a DCI. In other words, the UL WUS configuration information may be included in a payload of the DCI, and the DCI payload may be transmitted to the terminal through a PDCCH. Alternatively, the UL WUS configuration information may be included in a PDSCH, and the PDSCH may be dynamically scheduled by the DCI. The PDCCH and the PDSCH may be referred to as a first PDCCH and a first PDSCH, respectively, for convenience. The DCI may be referred to as a first DCI for convenience. Alternatively, the UL WUS configuration information may be referred to as an SIB0 in the sense that it is system information transmitted earlier than SIB1. In this case, the first PDCCH, the first PDSCH, and the first DCI may be referred to as an SIB0 PDCCH, an SIB0 PDSCH, and an SIB0 DCI, respectively, for convenience. An entity that transmits the first PDCCH and/or the first PDSCH may be the NES cell. In the former case (e.g., when the UL WUS configuration information is included in the DCI payload), the size of the UL WUS configuration information may be limited in order to maintain the DCI payload size at an appropriate level. For example, the payload size of the first DCI may not exceed the payload size of DCI format 1_0 and/or DCI format 0_0. Alternatively, the payload size of the first DCI may not exceed a maximum payload size (e.g., 128 bits) allowed for DCI formats.

The terminal may monitor the first PDCCH in the Type 0 PDCCH CSS set. In other words, the first PDCCH and the SIB1 PDCCH may be monitored in the same search space set. The search space set may be configured by the MIB (e.g., MIB transmitted by the NES cell). Additionally to or alternatively from the above-described exemplary embodiment, the search space set may be configured to the terminal by system information transmitted from another cell (e.g., SIB1, MIB, SIBx, or other system information transmitted by the anchor cell). An ID of the search space set may be fixed to 0. According to an exemplary embodiment, the first PDCCH may be configured to have the same DCI format as the SIB1 PDCCH (e.g., DCI format 1_0). The DCI format 1_0 of the first PDCCH and the DCI format 1_0 of the SIB1 PDCCH may be configured to have the same payload size, and the terminal may monitor both the first PDCCH and the SIB1 PDCCH through a single blind decoding.

The first PDCCH and the SIB1 PDCCH may be distinguished from each other by different RNTIs. In other words, an operation of receiving the UL WUS configuration information and an operation of receiving the SIB1 may be distinguished from each other in the DCI reception stage by the RNTI. A CRC of the first PDCCH may be scrambled by an RNTI other than SI-RNTI. The RNTI other than SI-RNTI may be predefined as a fixed value in the technical specifications. For example, the RNTI other than SI-RNTI may be defined as one of reserved RNTI values (e.g., one of values between hexadecimal FFF3 and FFFA). When the UL WUS configuration information is configured as part of the DCI payload, an operation of distinguishing based on the RNTI may be mandatorily performed by the terminal.

As another method, a CRC of the first PDCCH may be scrambled by an SI-RNTI. In this case, the first PDCCH may be distinguished from the SIB1 PDCCH by means other than the RNTI. For example, the UL WUS configuration information may be included in a PDSCH and transmitted to the terminal, and the terminal may identify that the configuration information included in the PDSCH is the UL WUS configuration information through a higher layer (e.g., non-access stratum (NAS) layer or application layer) message included in the PDSCH. Alternatively, the first PDCCH and the SIB1 PDCCH may be configured as DCI formats that are different from each other or as DCI formats having different payload sizes. For example, the first DCI may be a DCI format other than DCI format 1_0. Additionally to or alternatively from the above-described exemplary embodiment, a payload size of the first DCI may be different from a payload size of DCI format 1_0. The DCI format 1_0 may have a payload size applied for monitoring in a CSS set (e.g., Type 0 PDCCH CSS set), such as a payload size corresponding to a fallback DCI.

As yet another method, the first PDCCH and the SIB1 PDCCH may be distinguished by a DCI field. For example, the first PDCCH and the SIB1 PDCCH may have the same DCI format, the same DCI size, and the same RNTI. The terminal may receive the first DCI and may determine whether the first DCI corresponds to the first PDCCH or the SIB1 PDCCH by interpreting a specific field (e.g., indicator composed of one bit) included in the first DCI. The specific field may be defined by using a part of reserved bits in the DCI payload.

The first PDCCH may be periodically monitored. Within the same cell, the terminal may monitor the first PDCCH with a periodicity identical to the SSB periodicity (e.g., periodicity value). From the perspective of the base station, the SSB may correspond one-to-one to the first PDCCH. In other words, UL WUS configuration information corresponding to SSB in each SSB transmission period may be transmitted. The terminal may monitor the first PDCCH with a periodicity identical to the SSB periodicity, and the base station may transmit the first PDCCH only in some of SSB periods. In other words, the base station may selectively transmit the first PDCCH. According to the above-described method, a delay time from a time when the terminal acquires a cell ID and DL synchronization based on a received SSB to a time when the terminal acquires UL WUS configuration information may be minimized. For example, the terminal may receive both the SSB and the first PDCCH within the same SSB period. When the UL WUS configuration information is included in the first PDSCH, the first PDSCH may be periodically transmitted together with the first PDCCH based on the above-described method. In order to receive the first PDSCH, the terminal may receive one or more SSBs to acquire accurate DL synchronization.

As another method, the first PDCCH may be transmitted or monitored with a periodicity longer (or shorter) than the SSB periodicity. The monitoring periodicity (e.g., periodicity value) of the first PDCCH may be a multiple (or a divisor) of the SSB periodicity. The periodicity of the first PDCCH may be defined as a fixed value in the technical specifications. Alternatively, the periodicity of the first PDCCH may be signaled from the base station to the terminal. For example, the terminal may identify a transmission periodicity of the first PDCCH based on spare bit(s) included in the MIB. As another example, the terminal may identify the transmission periodicity of the first PDCCH by reinterpreting a code point or a bit value of a specific field of the MIB that has been already defined for another usage. In order to minimize a message size, a periodicity value in the signaling message may be represented as a ratio between the periodicity value of the first PDCCH and the periodicity value of the SSB, or as a quotient obtained by dividing the periodicity value of the first PDCCH by the periodicity value of the SSB. For example, assuming that the periodicity values of the first PDCCH and the SSB are P1 and P2, respectively, the signaling message may indicate P1/P2 or P2/P1. In an exemplary embodiment, the periodicity value of the first PDCCH may be a periodicity value of the Type 0 PDCCH CSS set.

In the second scenario, UL WUS configuration information may be transmitted from the neighboring cell (e.g., anchor cell) to the terminal. The anchor cell may be a cell on which the terminal is currently camped, and the terminal may receive the UL WUS configuration information included as a part of system information transmitted by the anchor cell. For example, the UL WUS configuration information may be included in SIB1 or SIBx (x = 2, 3, etc.), and a PDSCH including the UL WUS configuration information may be scheduled to the terminal through a DCI transmitted in the Type 0 PDCCH CSS set. The DCI may be transmitted through a PDCCH that schedules an SIB1 PDSCH or SIBx PDSCH, and the PDSCH may be the SIB1 PDSCH or the SIBx PDSCH. The above-described method may also be applied to the second scenario. For example, the DCI may be transmitted through the first PDCCH, and the PDSCH may be the first PDSCH. The base station may have difficulty in identifying when a terminal in the RRC idle/inactive mode accesses the NES cell. Therefore, when intending to allow the terminal to camp on or initially access the NES cell, the base station may periodically transmit UL WUS configuration information for the NES cell through a cell (e.g., anchor cell). For example, the DCI and/or the PDSCH may be periodically transmitted to the terminal.

For the purpose of improving resource efficiency, the UL WUS configuration information may be transmitted in an aperiodic manner. Alternatively, for the purpose of improving resource efficiency, the UL WUS configuration information may be transmitted within a specific time duration. For example, the terminal may perform a PDCCH monitoring operation for receiving the UL WUS configuration information in the cell when a predetermined condition is satisfied. When the terminal identifies, through the above-described method (e.g., MIB signaling, blind detection of SIB1, etc.), that SIB1 is not transmitted in the NES cell, the terminal may expect that the UL WUS configuration information is transmitted from the cell, and the terminal may perform an operation to receive the UL WUS configuration information from the cell. Additionally to or alternatively from the above-described exemplary embodiment, when a UL WUS trigger condition (e.g., trigger condition for UL WUS transmission) is satisfied, the terminal may perform an operation to receive the UL WUS configuration information. The UL WUS trigger condition being satisfied may include a case where it is determined that the terminal performs a cell reselection procedure for the NES cell, or a case where a quality (e.g., reference signal received power (RSRP)) of a DL signal measured from the NES cell by the terminal satisfies a threshold. Information on the time duration when the UL WUS configuration information is signaled may be shared between the base station (e.g., cell) and the terminal based on a predefined rule.

The UL WUS configuration information may be transmitted together with a cell ID of a cell (e.g., NES cell) that is a target of UL WUS transmission by the terminal. Configuration information (e.g., carrier, initial UL bandwidth part, SSB resource, numerology, subcarrier spacing, or SSB-RO association relationship (e.g., SSB-RO mapping relationship)) of the cell required for the terminal to transmit the UL WUS to the cell (e.g., NES cell) may be signaled to the terminal together with the UL WUS configuration information. Frequency locations of the carrier, the initial UL bandwidth part, and the SSB resource may be associated with each other. For example, a location of the carrier may be indicated by an absolute radio frequency channel number (ARFCN), and locations of the SSB resource and the initial UL bandwidth part may be indicated as offsets (e.g., RB offsets) from a start point of a bandwidth of the carrier. Alternatively, the SSB resource may be indicated by an ARFCN, and the locations of the carrier and the initial UL bandwidth part may be indicated as offsets (e.g., RB offsets) from a start point of the SSB frequency resource. A frequency resource of the UL WUS may be indicated to the terminal as a relative distance from the frequency location of one of the SSB resource, the carrier, or the initial UL bandwidth part.

Meanwhile, the UL WUS configuration of the NES cell may be changed or updated. In this case, the updated UL WUS configuration information (e.g., modified UL WUS configuration information) may be signaled to the terminal. A terminal camped on the NES cell may receive the updated UL WUS configuration information from the NES cell through the above-described method. To perform the above-described operation, the terminal may periodically monitor or receive the first PDCCH and/or the first PDSCH. Alternatively, the terminal camped on the NES cell may receive the updated UL WUS configuration information from the neighboring cell through the above-described method. To perform the above-described operation, the terminal may perform a procedure for camping on the neighboring cell and may receive the UL WUS configuration information of the NES cell from the neighboring cell. After receiving an on-demand SIB1 of the NES cell, the terminal may perform a procedure for camping on the NES cell again when necessary. In other words, the terminal may perform a cell reselection procedure to receive the updated UL WUS configuration information. Alternatively, the terminal may receive a DL signal (e.g., SIB1, SIBx, the first PDCCH, and/or the first PDSCH) including the UL WUS configuration information from the neighboring cell while camping on the NES cell. The above-described operation may be performed when the UL WUS trigger condition described above is satisfied.

A paging message may be used for the purpose of notifying the terminal of a change (e.g., update) in the UL WUS configuration information. The terminal may periodically monitor a paging signal in the NES cell. The terminal may receive a paging DCI (e.g., DCI transmitted through a PDCCH having a CRC scrambled by a paging-RNTI (P-RNTI) or a paging early indication-RNTI (PEI-RNTI)). The terminal may receive a paging PDSCH scheduled by the paging DCI, as needed. The paging message may be included in the paging PDSCH. Alternatively, the paging message may be included in a payload of the paging DCI in the form of a short message. The paging message may include information indicating that the UL WUS configuration information has been changed or information indicating that the UL WUS configuration information is to be received. The terminal may receive the UL WUS configuration information from the NES cell or the neighboring cell based on the information included in the paging message according to the above-described method. To indicate the above-described information, spare bit(s) defined in the payload of the paging DCI may be utilized. In the NR communication system, the paging DCI may have DCI format 1_0 and may be transmitted in a Type 2 PDCCH CSS set.

### [Composition method of UL WUS]

A terminal may trigger SIB1 transmission by transmitting a UL WUS to a cell (e.g., NES cell). The above-described operation may be performed after the terminal identifies that SIB1 is not transmitted in the cell (e.g., NES cell). Alternatively, in some cases, the terminal may perform the above-described operation regardless of whether SIB1 is transmitted in the cell (e.g., NES cell). Hereinafter, methods for configuring UL WUS are described.

As a first method, a UL WUS may be a random access preamble, a signal identical to a random access preamble, or a signal similar to a random access preamble. A random access preamble, a signal identical to a random access preamble, and a signal similar to a random access preamble may be collectively referred to as a 'random access preamble'. The random access preamble may refer to a PRACH preamble, an RA preamble, and the like. The random access preamble may be referred to as a preamble for convenience. In other words, the preamble may be interpreted as a random access preamble depending on a context. A resource in which a UL WUS is transmitted may be a PRACH resource, a resource having the same configuration as a PRACH resource, or a resource having a configuration similar to a PRACH resource. In the present disclosure, a PRACH resource, a resource having the same configuration as a PRACH resource, and a resource having a configuration similar to a PRACH resource may be collectively referred to as a 'PRACH resource'. The above-described first method may be referred to as (Method 100).

According to (Method 100), at least some of PRACH preambles used for random access operations of the terminal may be used as a UL WUS. The preamble may be generated based on a Zadoff-Chu (ZC) sequence having a length L. The preamble may be transmitted in a preconfigured time-frequency resource region. The resource region in which the preamble is transmitted may be referred to as a RACH occasion (RO) for convenience. A long preamble or a short preamble may be used depending on the size of the RO. The short preamble may be used when a time resource of the RO is relatively small (e.g., when the time resource of the RO is within one slot, or when the time resource of the RO is several symbol(s)). Depending on a PRACH format defining the RO, the preamble may be repeatedly transmitted in time within one RO. In an unlicensed band, in consideration of an occupied channel bandwidth (OCB) requirement, a separately defined preamble may be used in addition to the above-described preambles.

Unlike the random access procedure, when the terminal triggers SIB1 transmission through the UL WUS, an operation for identifying the terminal, an operation for specifying the terminal, and/or an operation for transmitting a response signal to the identified terminal (e.g., the specified terminal) in a procedure after UL WUS transmission may not be necessary. Therefore, when the terminal triggers SIB1 transmission by using a UL WUS based on a PRACH preamble, a procedure for contention resolution may not be required. In other words, it may not be problematic that a plurality of terminals transmit UL WUSs using the same preamble in the same resource. If the base station successfully detects the preamble regardless of the number of terminals that simultaneously transmitted the preamble, the base station may transmit SIB1 in the corresponding cell (e.g., NES cell),.

According to an exemplary embodiment, only one preamble may be used for UL WUS. The one preamble may be selected from among the PRACH preambles. The one preamble may be referred to as a UL WUS preamble. A terminal intending to transmit a UL WUS may be a terminal in the RRC idle state or RRC inactive state. Since the terminal in the RRC idle state or RRC inactive state has not yet received SIB1, it may be difficult to determine which procedure (e.g., which usage) each PRACH preamble is allocated for among a four-step RACH procedure, a two-step RACH procedure, and a contention-free RACH procedure. Therefore, the one preamble may be determined independently of a set and a number of PRACH preambles allocated for a four-step RACH procedure, a set and a number of PRACH preambles allocated for a two-step RACH procedure, and a set and a number of PRACH preambles allocated for a contention-free RACH procedure. For example, assuming that the number of PRACH preambles is M, the one preamble (e.g., UL WUS preamble) may be fixed as a first PRACH preamble (e.g., a PRACH preamble having index 0) or a last PRACH preamble (e.g., a PRACH preamble having index M-1). When the one preamble is the first PRACH preamble, the terminal may use the one preamble for both SIB1 transmission triggering and a four-step RACH procedure. As another method, the one preamble may be predetermined as one of the M PRACH preambles. In yet another method, the one preamble may be configured from the base station to the terminal as one of the M PRACH preambles. M may be a natural number.

According to another exemplary embodiment, a plurality of preambles may be used for UL WUS. Identically or similarly to the above-described exemplary embodiment, the plurality of preambles may be a part of the PRACH preambles. The plurality of preambles may refer to UL WUS preambles. The terminal may transmit a UL WUS to the base station based on the plurality of preambles. For example, the plurality of preambles may include a first preamble and a second preamble, and the first preamble and the second preamble may respectively correspond to first information and second information that the terminal intends to transmit to the base station. Alternatively, the first preamble and the second preamble may respectively correspond to a first content and a second content of information that the terminal intends to transmit to the base station. The terminal may notify the base station of the first information or the first content by transmitting a UL WUS using the first preamble. The terminal may notify the base station of the second information or the second content by transmitting a UL WUS using the second preamble. The information may be UE assistance information. Assuming that the number of preambles is N, the preambles for UL WUS may be predetermined as first N preambles or last N preambles among the PRACH preambles. Alternatively, N preambles used to trigger SIB1 transmission among M PRACH preambles may be configured from the base station to the terminal. The N preambles may have consecutive preamble indexes. In this case, the N preambles may be represented by an index of the first preamble and the number of preambles. Alternatively, the N preambles may be represented by an index of the first preamble and an index of the last preamble. Each of M and N may be a natural number.

Meanwhile, a UL WUS transmission operation based on multiple beams may be performed. The SSB may be repeatedly transmitted based on a plurality of beams, and a UL WUS transmission resource may be configured with a plurality of ROs. The plurality of ROs may be FDMed within the same symbol set. Alternatively, the plurality of ROs may be TDMed in different symbol sets. In other words, the plurality of ROs may be configured based on FDM and/or TDM. M preambles may be configured for each RO. One preamble or a plurality of preambles selected among the M preambles in each RO may be used as a UL WUS.

ROs for SIB1 transmission triggering may have an association relationship with SSBs. In SSB-RO mapping, among the ROs configuring PRACH resources (e.g., PRACH configuration), only RO(s) that satisfy a predetermined condition may have an association relationship with SSB(s). The RO(s) satisfying the predetermined condition may be referred to as valid RO(s). RO(s) that fail the validity check may be excluded from the SSB-RO mapping. Among the SSBs, only SSB(s) satisfying the predetermined condition may have an association relationship with RO(s). The SSB satisfying the predetermined condition may refer to an SSB that is actually transmitted (hereinafter referred to as an 'actual SSB'). Specifically, the actual SSB may refer to an SSB indicated to the terminal as being actually transmitted, or an SSB corresponding to an SSB resource associated with a PDSCH to which rate matching is applied. The PDSCH to which rate matching is applied may be indicated to the terminal. For example, in a certain frequency band, L SSB resources may be defined for repeated SSB transmission, and among the L SSB resources, M SSB resources or M SSBs corresponding to the M SSB resources may be indicated to the terminal as actual SSBs. Each of L and M may be a natural number. A relationship between M and L may be defined as '1≤M≤L'. The above-described information may be signaled to the terminal through system information (e.g., SIB1) or a terminal-specific RRC message. In the present disclosure, the SSB may be referred to as a valid SSB for convenience. In the exemplary embodiments below, the SSB and the RO may respectively refer to the valid SSB and the valid RO. In the exemplary embodiments, the SSB may refer to a CD-SSB.

In an exemplary embodiment, the ROs and the SSBs may have a one-to-one correspondence. In this case, the number of ROs may match the number of SSBs. In another exemplary embodiment, one RO may correspond to A SSBs. A may be a natural number equal to or greater than 2. In this case, M preambles configuring one RO may be divided into A preamble groups, and each of the A preamble groups may correspond to each SSB. For example, when M=64, a preamble group (e.g., first preamble group) including first 64/A preambles may be configured, and the first preamble group may be associated with the first SSB among the A SSBs. Each preamble group composed of 64/A preambles may correspond to a unique UL beam (e.g., UL TCI, transmission spatial correlation, etc.). When the number of ROs is R, a total of A×R preamble groups may be formed. Preamble(s) used for UL WUS may be determined within each preamble group according to the above-described method.

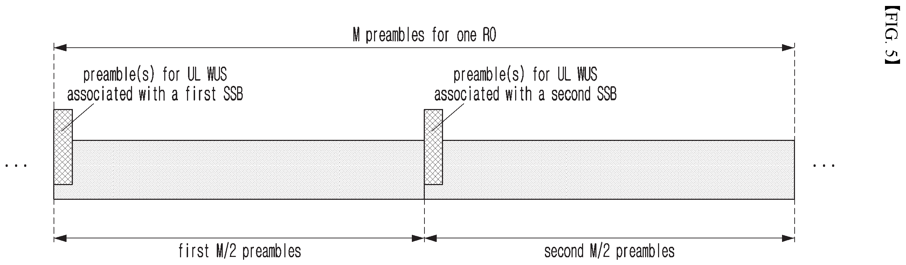

FIG. 5 is a conceptual diagram illustrating a first exemplary embodiment of a preamble allocation method for UL WUS.

Referring to FIG. 5, a plurality of ROs may be used for UL WUS transmission, and one RO may be associated with two SSBs. In other words, A may be 2. M preambles configuring the RO may be divided into a first preamble group including first M/2 preambles and a second preamble group including last M/2 preambles. When the number of ROs is R, a total of 2×R preamble groups may be configured in the above-described manner. Within each preamble group (e.g., the first preamble group or the second preamble group), the first preamble or first N preambles may be used as preambles for UL WUS. As another method, within each preamble group (e.g., the first preamble group or the second preamble group), the last preamble or last N preambles may be used as preambles for UL WUS. Alternatively, the terminal may determine N preamble(s) for UL WUS within each preamble group based on configuration information (e.g., UL WUS configuration information) received from the base station. Each of M, R, and N may be a natural number.

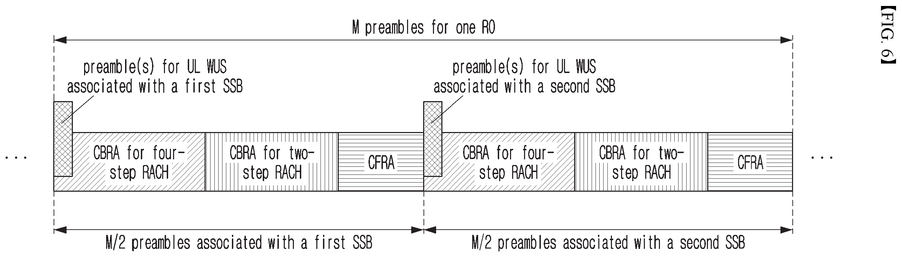

FIG. 6 is a conceptual diagram illustrating a second exemplary embodiment of a preamble allocation method for UL WUS.

Referring to FIG. 6, similarly or identically to the first exemplary embodiment of FIG. 5, a plurality of ROs may be used for UL WUS transmission, and one RO may be associated with two SSBs. For example, A may be 2. M preambles configuring each RO may be divided into two preamble groups, and first N preamble(s) (or last N preamble(s)) within each preamble group may be designated as preambles for UL WUS. Each of M and N may be a natural number.

The ROs may also be used for usages other than SIB1 transmission triggering. The terminal may receive configuration information of ROs for random access procedure from the base station after receiving SIB1. Alternatively, the terminal may receive configuration information of ROs for random access procedure from the base station during a process of entering the RRC active mode. The ROs for random access procedure and the ROs for UL WUS transmission may overlap. In other words, the ROs configured for the usage of SIB1 transmission triggering may be shared for the random access purpose. In the exemplary embodiment of FIG. 6, preambles (e.g., M/2 preambles) included in each preamble group may be allocated for a four-step RACH procedure, a two-step RACH procedure, a contention-free RACH procedure, or the like. For example, preambles at the beginning of each preamble group may be used for a contention-based four-step RACH procedure. Similarly or identically to the above-described exemplary embodiment, first N preambles in each preamble group may be allocated for UL WUS. As a result, preambles for RACH procedure and preambles for UL WUS may overlap. The terminal may use the overlapping preambles for both a UL WUS transmission operation and a PRACH transmission operation for random access. A mapping ratio (e.g., A) between ROs and SSBs may be set to the same value between RO configuration for UL WUS and RO configuration for random access procedures. A method of aligning the value A may be applied when ROs for UL WUS and ROs for random access procedure at least partially overlap.

The above-described two operations may be performed for different stages of an initial access procedure of the terminal. For example, the terminal that has not yet received SIB1 from the cell may not perform a random access procedure and may transmit a preamble only for the purpose of SIB1 transmission triggering. In contrast, the terminal that has received SIB1 from the cell may not perform the SIB1 trigger operation and may transmit a preamble only for the purpose of random access. The base station may distinguish an expected terminal behavior based on whether SIB1 is transmitted in the cell. Since SIB1 is a signal broadcast to unspecified terminals within a cell coverage, a probability that a plurality of terminals transmit the same preamble for different purposes may be low. Therefore, even when the method of sharing ROs or preambles based on the second exemplary embodiment (e.g., the second exemplary embodiment illustrated in FIG. 6) is used, ambiguity in terminal behavior at the base station may be avoided, and camping and initial access procedures of the terminal may be stably performed. According to the above-described method, RO resources may be reused for multiple usages, and resource efficiency may be increased. When available UL resources are sufficient, ROs for UL WUS and ROs for random access procedure may be separately allocated to different resource regions without overlap. The first exemplary embodiment of FIG. 5 may be interpreted as a case in which ROs (or preambles) for UL WUS are allocated separately from ROs (or preambles) for random access procedure.

In another exemplary embodiment regarding the association relationship between ROs for UL WUS and SSBs, B ROs may correspond to one SSB. For example, B may be a natural number greater than or equal to 2. In this case, B×M preambles configured for B ROs may form one preamble group, and each preamble group may correspond to each SSB. For example, M may be 64, and each preamble group may include B×64 preambles for B consecutive ROs. When multiple ROs are arranged in time-frequency resources, the ROs may first be indexed in frequency order in the frequency domain, and then indexed in time order in the time domain. The consecutive ROs may refer to ROs having consecutive indexes. Similarly or identically to the above-described exemplary embodiment, each preamble group may correspond to a unique UL beam (e.g., UL TCI, transmit spatial correlation, etc.). When the number of ROs is R, a total of R/B preamble groups may be configured. Preambles used for UL WUS may be determined within each preamble group according to the above-described method.

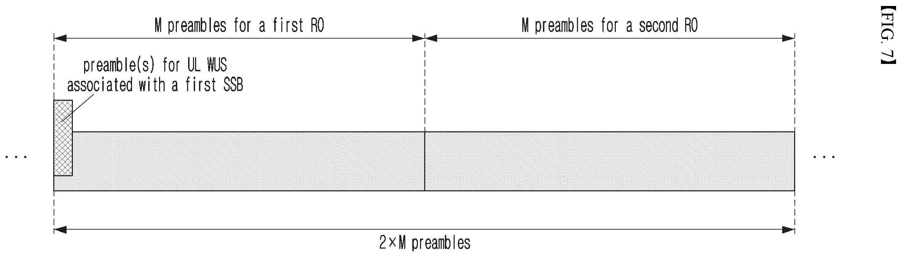

FIG. 7 is a conceptual diagram illustrating a third exemplary embodiment of a preamble allocation method for UL WUS.

Referring to FIG. 7, a plurality of ROs may be used for UL WUS transmission, and two ROs may be associated with one SSB. For example, B may be 2. 2×M preambles for the ROs may form a first preamble group, and a total of R/2 preamble groups may be formed in the above-described manner. A first preamble or first N preambles in each preamble group (e.g., the first preamble group) may be used as preambles for UL WUS. As another method, a last preamble or last N preambles in each preamble group (e.g., the first preamble group) may be used as preambles for UL WUS. Alternatively, the terminal may determine N preambles for UL WUS within each preamble group based on configuration information (e.g., UL WUS configuration information) received from the base station. The ROs may be used for random access procedure, and preambles allocated for UL WUS may be reused for the random access purpose. A mapping ratio (e.g., B) between ROs and SSBs may be set to the same value between RO configuration for UL WUS and RO configuration for random access. A method of aligning the value B may be applied when ROs for UL WUS and ROs for random access procedure at least partially overlap.

The terminal may select one or more preambles among UL WUS preambles determined through the above-described method and may transmit the selected preamble(s) to the base station (e.g., the cell). The terminal may request SIB1 transmission in the cell by transmitting the selected preamble(s) to the base station. For example, the terminal may select one preamble group (e.g., RO) and may transmit a UL WUS preamble allocated to the selected preamble group (e.g., RO). The UL WUS preamble may be transmitted based on a transmission beam corresponding to a reception beam of an SSB associated with the preamble group (e.g., RO) corresponding to the UL WUS preamble. When multiple UL WUS preambles are allocated to the selected preamble group, the terminal may select a preamble corresponding to information (e.g., content of the information) to be transmitted to the base station and may transmit the selected preamble to the base station. When the information is determined in a physical layer of the terminal, an operation of selecting one among the multiple preambles may be performed in the physical layer of the terminal. As another method, the terminal may randomly select one among the multiple preambles or may select the preamble based on a predefined rule and may transmit the selected preamble. In this case, the operation of selecting one among the multiple preambles may be performed in a higher layer of the terminal.

In order to further increase a sleep time of the base station, the UL WUS resource may be configured with a longer periodicity than a PRACH resource periodicity. In other words, a periodicity of an RO for UL WUS (hereinafter referred to as a 'UL WUS RO') may be longer than a periodicity of an RO for random access (hereinafter referred to as an 'RA RO'). According to a proposed method, a periodicity value of the UL WUS RO for the same terminal may be set as a multiple of a periodicity value of the RA RO. According to the above-described method, even when the periodicity value of the UL WUS RO and the periodicity value of the RA RO are different, the UL WUS RO and the RA RO may be arranged to overlap periodically, and resource efficiency may be increased. According to the above-described method, a random access procedure based on the UL WUS RO may be efficiently performed. The random access procedure based on the UL WUS RO will be described below.

Similarly or identically to the above-described exemplary embodiment, the UL WUS configuration information may be defined as a separate signaling message distinguishable from PRACH configuration information. The PRACH configuration information may be a message transmitted to a legacy terminal. As a method different from the above-described method, the UL WUS configuration information may be included in the PRACH configuration information. The UL WUS configuration information may be a part of the PRACH configuration information. As another method, a message including the PRACH configuration information may be modified or extended, and the modified message (or extended message) may be transmitted for the purpose of indicating a UL WUS operation of the terminal. The UL WUS configuration information may be derived based on the PRACH configuration information. The above-described method may also be interpreted as including the PRACH configuration information in the UL WUS configuration information or deriving the PRACH configuration information based on the UL WUS configuration information. According to the above-described method, the UL WUS resource and the PRACH resource may be identical. In other words, the UL WUS resource and the PRACH resource may not be distinguishable. Alternatively, the UL WUS resource and the PRACH resource may overlap. When the periodicity of the UL WUS resource and the periodicity of the PRACH resource are different, the UL WUS resource and the PRACH resource may overlap only in some periods. The UL WUS resource may refer to a UL WUS RO, and the PRACH resource may refer to an RA RO.

A UL WUS resource configuration associated with the PRACH configuration information may be valid in the second scenario. For example, the anchor cell may transmit at least a portion of SIB1 of the NES cell to the terminal. The PRACH configuration information included in the SIB1 of the NES cell may be transmitted to the terminal by the anchor cell, and the terminal may obtain information necessary for UL WUS transmission based on the PRACH configuration information. The UL WUS resource configuration method associated with the PRACH configuration information may also be used in the first scenario. For example, the PRACH configuration information of the NES cell may be included in the above-described first PDSCH, and the first PDSCH including the PRACH configuration information may be transmitted to the terminal.

Similarly or identically to the above-described exemplary embodiment, the terminal may receive configuration information of a set of ROs, and each RO may include PRACH preambles. In other words, each RO may be associated with PRACH preambles. Alternatively, according to the association relationship between SSBs and ROs, each preamble group corresponding to an SSB may include PRACH preambles. The PRACH preambles configuring each RO or each preamble group may include preamble(s) for contention-based RACH procedure and preamble(s) for contention-free RACH procedure. The PRACH preambles may include preamble(s) for four-step RACH and preamble(s) for two-step RACH. For example, similarly or identically to the second exemplary embodiment of FIG. 6, the PRACH preambles may be appropriately divided for contention-based four-step RACH, contention-based two-step RACH, and/or contention-free RACH. Information on a range of preambles for each purpose may be included in the PRACH configuration information.

Some of the PRACH preambles included in the RO or the preamble group may be configured as UL WUS preambles. According to a proposed method, some of the PRACH preambles allocated for a specific RACH procedure may be reused as UL WUS preambles. For example, first N preambles (or, preambles having the lowest indexes) and/or last N preambles (or, preambles having the highest indexes) among the PRACH preambles may be used as UL WUS preambles. As another method, the terminal may determine N preambles among the PRACH preambles as UL WUS preambles based on configuration information received from the base station. The configuration information may be a part of the PRACH configuration information. Alternatively, the configuration information may be transmitted to the terminal along with the PRACH configuration information. For example, the specific RACH procedure may be a contention-free four-step RACH procedure.

In an exemplary embodiment, UL WUS preambles may not be separately configured, and all PRACH preambles configured by the PRACH configuration may be used for UL WUS. For example, all PRACH preambles included in each RO or each preamble group may be used for UL WUS. In other words, N may match a cardinality of the preamble group. Alternatively, all preambles allocated for a specific RACH procedure(s) within the RO or the preamble group may be used for UL WUS. For example, all preambles configured for contention-free four-step RACH and/or contention-free two-step RACH may be used for UL WUS. UL WUS resources may not be separately configured, and a UL WUS may be transmitted in the RO(s) configured by the PRACH configuration information. The terminal may select one of a plurality of preambles and may transmit the selected preamble in the UL WUS resource. The one preamble may be randomly selected, and the one preamble may be determined (e.g., selected) by a higher layer of the terminal.

According to another proposed method, the PRACH preambles and the UL WUS preamble(s) may be distinguished from each other within the RO or within the preamble group. For example, the RO or the preamble group may include a first preamble subgroup for contention-free four-step RACH procedure (or, contention-free two-step RACH procedure, contention-based RACH procedure) and a second preamble subgroup for UL WUS. The first preamble subgroup and the second preamble subgroup may be disjoint from each other. Information specifying a range of the first preamble subgroup and information specifying a range of the second preamble subgroup may both be included in the PRACH configuration information, and the PRACH configuration information may be signaled to the terminal. Alternatively, the information specifying the range of the second preamble subgroup may be configured as a separate message, and the information specifying the range of the first preamble subgroup may be included in the PRACH configuration information. The separate message may be signaled to the terminal together with the PRACH configuration information. The information (e.g., the information specifying the range of the first preamble subgroup and the information specifying the range of the second preamble subgroup) may be transmitted to the terminal through the same PDSCH or the same PDCCH.

According to the above-described method, a UL WUS resource may include one or more ROs. The UL WUS resource may further include an additional UL resource. Hereinafter, the additional UL resource may be referred to, for convenience, as a first resource. The terminal may transmit information to the base station through the first resource in an explicit or implicit manner. The information may be referred to, for convenience, as first information. The first information may include terminal assistance information (e.g., UE assistance information). The UE assistance information may be information that helps determine an SIB1 transmission operation of the cell (e.g., NES cell). The terminal may generate the UE assistance information and may transmit the UE assistance information to the base station. For example, the UE assistance information may be information related to a reception quality (e.g., RSRP, reference signal received quality (RSRQ), received signal strength indicator (RSSI), etc.) of an SSB received by the terminal from the cell. Alternatively, the UE assistance information may include information on a number of SIB1 transmissions, a SIB1 monitoring periodicity (or transmission periodicity), a subset of messages or parameter sets included in SIB1, or an SIB1 reception beam (or an optimal SSB beam or SSB resource), which is preferred (or requested) by the terminal. The base station may determine an SIB1 transmission operation of the cell based on the UE assistance information received through the UL WUS, and may resume the SIB1 transmission in the cell based on the determined operation. For example, the SIB1 may be periodically transmitted by the above-described method.

A UL WUS resource may include one RO and one first resource. Alternatively, in consideration of UL WUS transmission by multiple beams, a UL WUS resource may be configured to include R ROs and R first resources. Each RO may be associated with one first resource, and the associated RO and first resource may be transmitted based on the same transmission beam (e.g., the same UL TCI). Alternatively, preamble groups constituting the RO(s) may be associated with the first resources. For example, the R ROs may include A×R preamble groups, and the A×R preamble groups may correspond one-to-one to the A×R first resources. In other words, one RO may be associated with a plurality of first resources, and the UL WUS resource may include R ROs and A×R first resources. As another example, the R ROs may be configured with R/B preamble groups, and the R/B preamble groups may correspond one-to-one to the R/B first resources. In other words, one first resource may be associated with a plurality of ROs, and the UL WUS resource may include R ROs and R/B first resources. Each of A, B, and R may be a natural number.

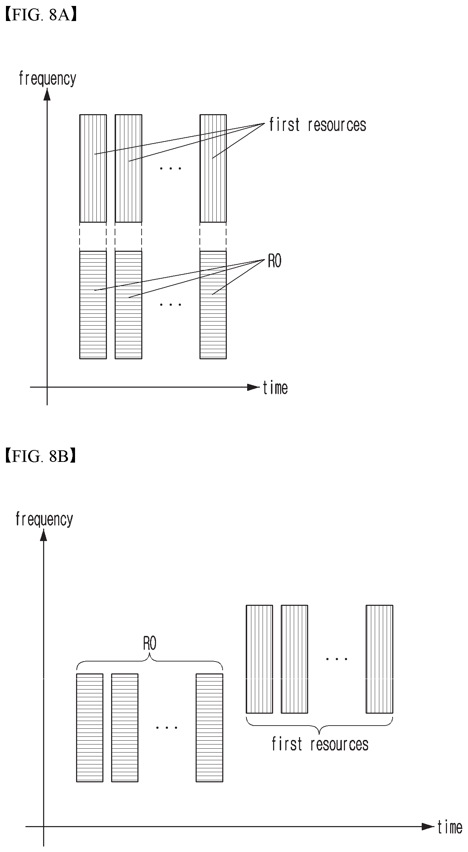

FIG. 8A is a conceptual diagram illustrating a first exemplary embodiment of a method for configuring a UL WUS resource including first resources, and FIG. 8B is a conceptual diagram illustrating a second exemplary embodiment of a method for configuring a UL WUS resource including first resources.

Referring to FIG. 8A and FIG. 8B, a UL WUS resource may include a plurality of ROs and a plurality of first resources. In the exemplary embodiment of FIG. 8A, the ROs and the first resources may be FDMed in the same time resource (e.g., the same symbol(s)). In the exemplary embodiment of FIG. 8B, the ROs and the first resources may be TDMed in different time resources (e.g., different symbols).

According to the first exemplary embodiment, since the UL WUS occupies a relatively small amount of time resources, the resource efficiency and the power efficiency of the base station and the terminal may be improved. In this case, information on a frequency offset (e.g., RB offset, subcarrier offset) between the frequency resources of the ROs and the frequency resources of the first resources may be additionally included in UL WUS configuration information (or, PRACH configuration information). The UL WUS configuration information may refer to UL WUS resource configuration information. According to the second exemplary embodiment, a degree of freedom (flexibility) in resource allocation for the ROs and the first resources may be increased. In this case, information on a time offset (e.g., slot offset, symbol offset) between the time resources of the ROs and the time resources of the first resources may be additionally included in UL WUS configuration information (or, PRACH configuration information). The base station may select one of the multiplexing methods applied in the exemplary embodiments, and may configure the UL WUS resource based on the selected method. Information on the UL WUS resource configuration (e.g., UL WUS configuration information) may be signaled to the terminal by the above-described method, and the terminal may perform an operation of transmitting a preamble in the RO and/or an operation of transmitting a signal in the first resource associated with the RO based on the signaled information.

The first resource may be defined with a set of sequences. For example, the first resource may be an SRS resource. Alternatively, the first resource may be a physical channel. For example, the first resource may be a PUSCH or PUCCH. A link adaptation scheme may be applied to the first resource configured as a physical channel. When the link adaptation scheme is applied to the first resource, flexibility in resource allocation and transmission reliability may be further ensured compared to sequence-based transmission. The first resource may be transmitted based on at least one of waveform schemes such as OFDM, DFT-S-OFDM, or single carrier. For example, the base station may appropriately select a waveform scheme of the first resource and may signal information on the selected waveform scheme to the terminal. The terminal may identify the waveform scheme indicated by the signaling from the base station. The information on the waveform scheme may be included in configuration information of the first resource (or, UL WUS configuration information or PRACH configuration information).

Similarly or identically to the above-described exemplary embodiment, the first resource may be a PUSCH resource. In other words, a UL WUS resource may be configured to include RO(s) and PUSCH resource(s). The terminal may receive, from the base station, resource allocation information and/or scheduling information necessary for transmitting a PUSCH in the PUSCH resource through the above-described signaling scheme. The resource allocation information may include time-domain and frequency-domain resource allocation information of the PUSCH, a PUSCH repetition transmission type, a PUSCH repetition transmission count, and a mapping type of a PUSCH DM-RS. The scheduling information may include at least the number of transmission layers of the PUSCH, a transport block (TB) size, an MCS, a redundancy version (RV), a new data indicator (NDI), and a HARQ process ID. Since the PUSCH is transmitted for a special purpose only during a camping stage or an initial access stage of the terminal, a fixed HARQ process ID may be assigned to the PUSCH. Alternatively, a HARQ process ID may not be assigned to the PUSCH. In this case, the scheduling information of the PUSCH may not include a HARQ process ID. The PUSCH may include a TB, and the TB may include the first information. When the first information is generated or determined by a higher layer of the terminal, the first information may be included in the TB in the form of a MAC CE. Alternatively, the PUSCH may include UCI, and the UCI may include the first information. In this case, the first information may be generated or determined by the physical layer of the terminal. The PUSCH resource may overlap with a MsgA PUSCH resource of a two-step RACH procedure. Alternatively, the PUSCH resource may overlap with a Msg3 PUSCH resource of a four-step RACH procedure. The first resource may include a plurality of PUSCH resources (e.g., a plurality of PUSCH occasions), and the plurality of PUSCH resources (e.g., PUSCH occasions) may be allocated to resources separated from the MsgA PUSCH resources or the Msg3 PUSCH resources. Alternatively, the plurality of PUSCH resources may partially overlap or fully overlap with the MsgA PUSCH resources or the Msg3 PUSCH resources.

Since a UL WUS is transmitted before the terminal performs a random access procedure to a cell (e.g., NES cell), the terminal may transmit the UL WUS to the cell before acquiring UL synchronization with the cell. In other words, the UL WUS may be transmitted asynchronously.

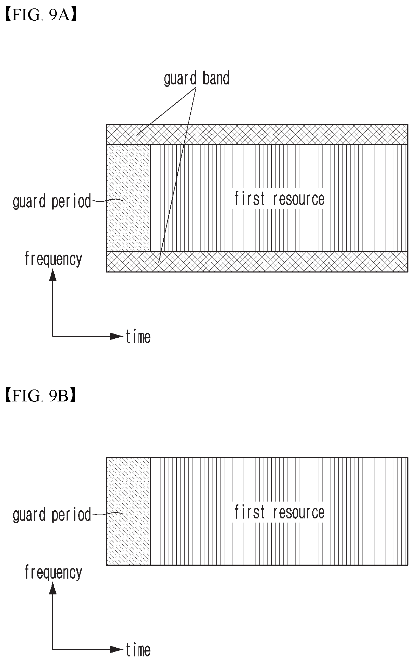

FIG. 9A is a conceptual diagram illustrating a first exemplary embodiment of a method for configuring a first resource for asynchronous transmission, and FIG. 9B is a conceptual diagram illustrating a second exemplary embodiment of the method for configuring a first resource for asynchronous transmission.

Referring to FIGS. 9A and 9B, in the time domain, a start part of the first resource or a resource immediately preceding the first resource may be configured as a guard period. The guard period may be configured in consideration of a propagation delay and delay spread value between the cell and the terminal. In the exemplary embodiment of FIG. 9B, in the frequency domain, an end part of the first resource or a resource adjacent to the first resource may be configured as a guard band. The guard band(s) may be configured at both ends or one end of a frequency region of the first resource. The guard band(s) may serve to mitigate interference caused by non-orthogonality with a signal transmitted in an adjacent frequency. At a time when the terminal transmits the UL WUS to trigger SIB1 transmission, terminals connected to the cell may not exist or may be very few, and a probability that a signal is transmitted in a frequency region adjacent to the first resource configured in the terminal may be low. In such a case, configuring the first resource to include the guard band(s) or together with the guard band(s) may not be necessary. Therefore, as in the exemplary embodiment of FIG. 9B, the first resource may include only the guard period without the guard band(s). In other words, the first resource may be configured together with the guard period without the guard band(s).

A UL WUS may be transmitted in a UL bandwidth part. For example, the UL WUS may be transmitted in an initial UL bandwidth part. When the terminal transmits the UL WUS to the NES cell, it may be difficult for the terminal to receive in advance an SIB1 including information on the initial UL bandwidth part of the NES cell. Therefore, a method of further including configuration information of the initial UL bandwidth part in the UL WUS configuration information may be considered. The configuration information of the initial UL bandwidth part may include at least information on a frequency range of the initial UL bandwidth part (e.g., a start RB and a number of RBs, or a start RB and an end RB) and/or a numerology. The RB may be a CRB, and the numerology may include at least a subcarrier spacing. Meanwhile, in the second scenario, the SIB1 of the NES cell may be transmitted to the terminal from the neighboring cell (e.g., anchor cell), and the terminal may determine the initial UL bandwidth part of the NES cell before transmitting the UL WUS to the NES cell based on the reception of the SIB1.

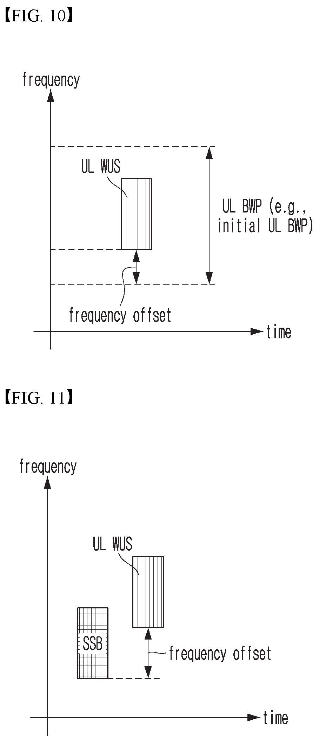

FIG. 10 is a conceptual diagram illustrating a first exemplary embodiment of a method for configuring a frequency resource of a UL WUS.

Referring to FIG. 10, a frequency resource of a UL WUS may be determined based on a frequency location of a UL bandwidth part (e.g., initial UL bandwidth part). For example, a start point (e.g., a start RB or a start subcarrier) of the frequency resource of the UL WUS may be determined as a location shifted by a predetermined frequency offset (e.g., an RB offset or a subcarrier offset) from a start point (e.g., a start RB or start subcarrier) of the initial UL bandwidth part. Information on the frequency offset may be included in UL WUS configuration information and/or PRACH configuration information, and the information on the frequency offset may be transmitted to the terminal through the above-described signaling scheme.

In the above-described exemplary embodiment, the UL WUS resource may indicate an RO. Similarly or identically to the above-described exemplary embodiment, for an operation based on multiple beams, a plurality of ROs may be considered, and the plurality of ROs may be mapped to different frequency regions. The frequency offset may be used to determine a frequency location of one of the ROs forming the UL WUS resource. The one of the ROs may be an RO mapped to the lowest frequency region and/or an RO having the lowest index among the ROs forming the UL WUS resource. The frequency location of RO(s) mapped to a frequency region different from that of the RO may be represented as an offset from the frequency resource of the RO, and the offset may be further signaled to the terminal.

The UL WUS resource may further include a first resource. Both the RO and the first resource may be included in the initial UL bandwidth part. The first resource may be configured based on a subcarrier spacing of the initial UL bandwidth part. For example, the first resource may be a PUSCH or a PUCCH, and PUSCH transmission or PUCCH transmission may be performed based on the subcarrier spacing. A PRACH preamble may be transmitted in the RO based on the subcarrier spacing. A format of the PRACH may be limited to a specific format. For example, the specific format may be a short PRACH format (e.g., PRACH Format A, B, or C). A PRACH preamble having the specific format may be transmitted based on the subcarrier spacing of the initial UL bandwidth part. A PRACH preamble that does not have the specific format may be transmitted based on a subcarrier spacing different from the subcarrier spacing, and the different subcarrier spacing may be separately signaled to the terminal or predefined according to a frequency band in the technical specifications.

Meanwhile, the terminal may receive SIB1 from the cell after the above-described procedure and may acquire configuration information on the initial UL bandwidth part included in the SIB1. The configuration information on the initial UL bandwidth part configured for UL WUS transmission and the configuration information on the initial UL bandwidth part by the SIB1 may match. In other words, the terminal may not expect the two initial UL bandwidth parts to be configured differently. The initial UL bandwidth part is merely one example of configuration, and the above-described concept may be generally applied to any configuration parameter included in the UL WUS configuration. In other words, when certain configuration information (or configuration parameter) is included in both the UL WUS configuration and the SIB1 and transmitted to the terminal, a first configuration value of the configuration information included in the UL WUS configuration and a second configuration value of the configuration information included in the SIB1 may match.

As another method, it may be allowed that the base station configures, for the same terminal, an initial UL bandwidth part by the SIB1 differently from the initial UL bandwidth part for UL WUS transmission. A terminal that has received both pieces of configuration information of the two bandwidth parts may apply configuration information acquired later procedurally or temporally (e.g., the configuration information on the initial UL bandwidth part by the SIB1), and may perform a UL transmission operation based on the applied configuration information. The initial UL bandwidth part is merely one example of configuration, and the above-described concept may be generally applied to any configuration parameter included in the UL WUS configuration. In other words, when certain configuration information (or configuration parameter) is included in both the UL WUS configuration and the SIB1 and transmitted to the terminal, a first configuration value of the configuration information included in the UL WUS configuration and a second configuration value of the configuration information included in the SIB1 may differ. In this case, when the SIB1 is received (e.g., after the SIB1 is received) after the UL WUS configuration, the terminal may regard the configuration information as having the second configuration value included in the SIB1, and may perform an operation according to the second configuration value. The terminal may regard the configuration information as having the first configuration value included in the UL WUS configuration before receiving the SIB1 and may perform an operation according to the first configuration value. In other words, in a specific operation duration of the terminal, the first configuration value may be overridden by the second configuration value. A priority of the second configuration value may be higher than a priority of the first configuration value. In other words, the second configuration value may be applied with a priority over the first configuration value. According to the above-described method, the initial UL bandwidth part configured for UL WUS transmission may be used in a limited manner only for the above-described purpose.

As another method, the UL WUS transmission may not depend on a UL bandwidth part (e.g., initial UL bandwidth part).

FIG. 11 is a conceptual diagram illustrating a second exemplary embodiment of a method for configuring a frequency resource of a UL WUS.

Referring to FIG. 11, a terminal may transmit a UL WUS to a cell without configuration or dependency on an initial UL bandwidth part of the cell. A frequency resource of the UL WUS may be determined based on a frequency resource of a DL signal (e.g., SSB). For example, a start point (e.g., a start RB or a start subcarrier) of the frequency resource of the UL WUS may be determined as a location shifted by a predetermined frequency offset (e.g., RB offset or subcarrier offset) from a start point (e.g., a start RB or a start subcarrier) of a frequency resource of the SSB. Alternatively, the frequency resource of the UL WUS may be determined based on a frequency resource of a carrier (e.g., DL carrier or UL carrier). For example, the start point (e.g., the start RB or start subcarrier) of the frequency resource of the UL WUS may be determined as a location shifted by a predetermined frequency offset (e.g., RB offset or subcarrier offset) from a start point (e.g., a start RB or a start subcarrier) of a bandwidth of the carrier. Information on the frequency offset may be signaled to the terminal. When the UL WUS resource includes a plurality of ROs, the frequency offset may indicate a frequency offset for one of the ROs.

In a TDD system, the UL WUS may be transmitted in UL symbols and/or flexible symbols. When an RO for the UL WUS overlaps with DL symbol(s), the RO may be regarded as an invalid RO, and the UL WUS may not be transmitted in the RO. Configuration information of a TDD slot format may be included in an SIB1, and the terminal may transmit the UL WUS before receiving information on the slot format (e.g., TDD slot format) of the cell to which the UL WUS is to be transmitted. In the present disclosure, the configuration information of the TDD slot format may be assumed for a TDD cell (e.g., cell supporting TDD). The configuration information of the TDD slot format may indicate configuration information of a general slot format, and the configuration information of the general slot format may be applied to an FDD cell. The terminal may assume that RO transmission is possible in all symbols of the cell. For example, the terminal may regard all symbols of the cell as flexible symbols. Alternatively, the terminal may regard all symbols of the cell as UL symbols, at least from the perspective of UL WUS transmission. The all symbols may be symbols excluding symbols for a specific purpose (e.g., symbols to which DL signals such as SSB are mapped, or symbols configured as the CORESET #0). All ROs forming the UL WUS resource (or ROs satisfying an overlap avoidance condition with some DL signals such as SSB) may be regarded as valid ROs.

As another method, the SIB1 of the cell (e.g., NES cell) may be transmitted to the terminal by another cell (e.g., anchor cell). Configuration information of a TDD slot format of the cell (e.g., NES cell) may be included in UL WUS configuration information (or PRACH configuration information) and may be transmitted to the terminal. The UL WUS configuration information (or PRACH configuration information) may be transmitted from the anchor cell to the terminal. The terminal may determine a transmission direction of each symbol based on the received configuration information of the slot format (e.g., TDD slot format), and may verify validity of the RO(s) forming the UL WUS resource by using the above-described method. Alternatively, the terminal may expect that all UL WUS ROs are arranged in UL symbols and/or flexible symbols. In this case, the procedure for verifying the validity of the RO(s) may not be necessary.

In the above-described exemplary embodiment, even when the UL WUS is transmitted without depending on the initial UL bandwidth part or the TDD slot format, the UL WUS resource may be correlated with the initial UL bandwidth part and/or the slot format subsequently configured by the SIB1. For example, the UL WUS resource may be included in the initial UL bandwidth part configured by the SIB1. The UL WUS resource may be transmitted based on a numerology (e.g., subcarrier spacing) of the initial UL bandwidth part configured by the SIB1. According to the above-described method, a UL operating frequency, RF/baseband filtering, waveform, numerology, etc. of the terminal may be equally applied to procedures before and after reception of the SIB1 by the terminal, and implementation complexity of the terminal may be reduced. As another example, the RO(s) of the UL WUS resource may not overlap with DL symbols of the slot format configured by the SIB1, and the RO(s) of the UL WUS resource may be configured in UL symbols and/or flexible symbols. According to the above-described method, the configuration information of the slot format transmitted to the terminal through the UL WUS configuration may match the configuration information of the slot format transmitted to the terminal through the SIB1. The UL WUS resource (e.g., valid UL WUS resource, valid RO) may be determined based on the slot format configuration included in the UL WUS configuration. The above-described exemplary embodiment may have the same meaning as the UL WUS resource being based on the slot format configuration included in the SIB1.

In the UL WUS transmission methods using a PRACH preamble, under an assumption that a transmission beam and a reception beam are properly aligned, a reception failure of a UL WUS preamble at a cell may be caused by insufficient transmission power of the UL WUS preamble. Accordingly, when the terminal retransmits the UL WUS preamble to the same cell, power ramping may be applied to increase the transmission power. When the UL WUS preamble is retransmitted multiple times, the transmission power may be gradually increased. An increment of transmission power applied in each retransmission procedure may be predefined in the technical specifications. Alternatively, the increment of transmission power applied in each retransmission procedure may be included in the UL WUS configuration information (or the PRACH configuration information), and the base station may transmit the UL WUS configuration information including the transmission power increment to the terminal. The terminal may receive the UL WUS configuration information including the transmission power increment from the base station.

According to the above-described exemplary embodiments, ROs for UL WUS may be associated with valid SSBs (e.g., actual SSBs). The terminal may transmit a UL WUS before receiving system information (e.g., SIB1) for the cell (e.g., NES cell). Therefore, the terminal may not be able to derive the above-described SSB-RO mapping relationship at a time of transmitting the UL WUS. As a result, the terminal may not be able to identify a UL WUS RO associated with an SSB (e.g., valid SSB) selected by the terminal, and a UL WUS transmission operation of the terminal may not be performed normally.

As a method for solving the above-described problem, a UL WUS configuration message (e.g., UL WUS configuration information) may further include information indicating valid SSB(s) of the corresponding cell (e.g., NES cell), information on an SSB-RO mapping ratio, and the like. The valid SSB(s) may indicate actually transmitted SSB(s), or SSB(s) indicated to be actually transmitted to the terminal. The terminal may identify the valid SSB(s) based on the received UL WUS configuration information, may map valid RO(s) for the UL WUS to the valid SSB(s), may determine the UL WUS RO corresponding to a specific SSB identified by the terminal based on the SSB-RO mapping, and may transmit the UL WUS preamble in the determined UL WUS RO. The terminal may expect that the information indicating valid SSB(s) identified based on the UL WUS configuration matches the information indicating valid SSB(s) identified based on the SIB1. The UL WUS preamble may indicate a UL WUS (e.g., a preamble included in the UL WUS).

As another method, the SSB-RO mapping for UL WUS may be performed for all SSBs (e.g., L SSBs) defined in the cell. L may be a natural number. The L SSBs may include invalid SSBs (e.g., SSBs not actually transmitted). The SSBs may be mapped to valid RO(s) for UL WUS. According to the above-described method, the terminal may determine an RO to transmit a UL WUS preamble even without prior information on the valid SSBs, and the UL WUS may be transmitted normally. According to the above-described method, it may be difficult for the UL WUS ROs and ROs for conventional PRACH procedure to efficiently coexist (or overlap) in the same time-frequency resource.

As a method different from (Method 100), the UL WUS may be an SRS, a signal identical to an SRS, or a signal similar to an SRS. An SRS, a signal identical to an SRS, and a signal similar to an SRS may be collectively referred to as 'SRS'. A UL WUS resource may be an SRS resource, a resource configured identically to an SRS resource, or a resource configured similarly to an SRS resource. An SRS resource, a resource configured identically to an SRS resource, and a resource configured similarly to an SRS resource may be collectively referred to as 'SRS resource'. Alternatively, a UL WUS may be a new UL signal that is not a conventional UL signal. A terminal in the RRC idle/inactive mode may transmit the SRS or the new UL signal to a cell at least for the purpose of SIB1 triggering. In this case, the detailed methods applied in (Method 100) may be equally applied. In other words, the UL WUS resource may be formed of a plurality of resources based on multiple beams, and the UL WUS resource may be configured to include the first resource(s). For example, the UL WUS resource may include SRS resource(s) and first resource(s). Alternatively, the UL WUS resource may include resource(s) for the new UL signal(s) and the first resource(s). The above-described association relationship and multiplexing method between the RO(s) and the first resource(s), the asynchronous transmission method of the first resource, and the frequency resource configuration method of the UL WUS may be equally or similarly applicable to the UL WUS configuration based on the SRS or the new UL signal.

### [Random access procedure based on UL WUS]

A purpose of requesting SIB1 transmission from a cell (e.g., NES cell) by a terminal may include at least two objectives. A first objective may be for the terminal to camp on the cell. A second objective may be for the terminal to perform an initial access to the cell. For the first objective, the terminal may perform a DL measurement operation and a paging operation based on cell configuration information included in an SIB1. For the second objective, the terminal may attempt to establish an RRC connection by performing a random access procedure based on the cell configuration information included in the SIB1. The terminal may initiate a four-step or two-step random access procedure by transmitting a Msg1 PRACH or a MsgA PRACH to the cell after receiving the SIB1.

In the PRACH preamble-based UL WUS transmission method, the above-described random access procedure may be further optimized. As a proposed method, the UL WUS may trigger not only SIB1 transmission of the cell but also a random access procedure. In other words, the UL WUS may simultaneously trigger the SIB1 transmission and the random access procedure. The UL WUS may simultaneously perform the functions of the SIB1 trigger and the PRACH preamble. The random access procedure based on the UL WUS proposed below will be described.

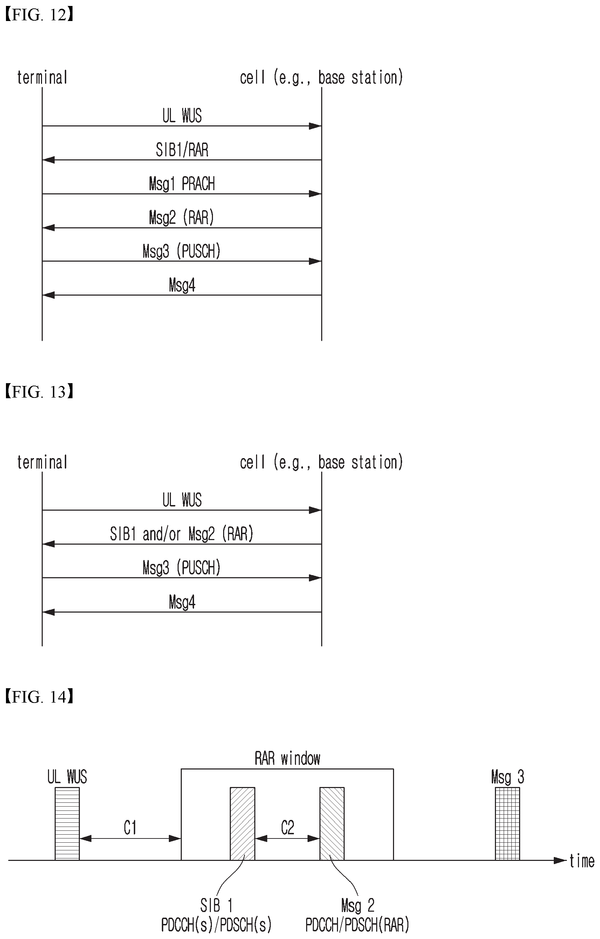

FIG. 12 is a sequence chart illustrating a first exemplary embodiment of a random access method based on a conventional four-step RACH procedure.

Referring to FIG. 12, a terminal may transmit a UL WUS to a cell (e.g., base station) and may receive an SIB1 from the cell. The terminal may receive a random access response (RAR) from the cell as a response message for the UL WUS. The terminal may perform a four-step random access operation based on a legacy RACH procedure after receiving the SIB1 and/or the RAR. For example, the terminal may transmit a Msg1 PRACH to the cell after receiving the SIB1 and/or the RAR. In other words, the random access procedure of the terminal may be separated from the SIB1 trigger operation and the SIB1 reception operation. According to the above-described method, the UL WUS transmission and the Msg1 PRACH transmission may be unnecessarily redundant. Accordingly, the terminal may redundantly receive the RAR twice.

FIG. 13 is a sequence chart illustrating a first exemplary embodiment of a four-step random access method based on UL WUS.

Referring to FIG. 13, a terminal may transmit a UL WUS to a cell (e.g., base station). The terminal may enter a random access procedure while requesting SIB1 transmission. The terminal may expect to receive a response message for the UL WUS from the cell. Specifically, the terminal may expect to receive an SIB1 and/or Msg2 (e.g., RAR) as a response to the UL WUS. The transmission and reception stage of the SIB1 and/or Msg2 (e.g., RAR) may be regarded as a second step of a four-step RACH procedure. The terminal may transmit a Msg3 PUSCH to the cell after receiving the SIB1 and/or Msg2. According to the above-described operation, a Msg1 PRACH transmission procedure and/or Msg2 reception procedure may be omitted, and the above-described unnecessary redundancy problem may be resolved. A time required for the random access procedure may be reduced. In a proposed method related to the above-described procedure, the terminal may expect to receive the SIB1 and the Msg2 in a RAR window. The above-described operation may be referred to as (Method 200).

FIG. 14 is a conceptual diagram illustrating a second exemplary embodiment of a four-step random access method based on UL WUS.

Referring to FIG. 14, a terminal may perform a PDCCH monitoring operation for SIB1 reception and a PDCCH monitoring operation for Msg2 reception within a RAR window. The PDCCH monitoring operation for SIB1 reception within the RAR window may be performed based on an SI-RNTI in the Type 0 PDCCH CSS set. The PDCCH monitoring operation for Msg2 reception may be performed based on an RA-RNTI in the Type 1 PDCCH CSS set. The terminal may expect that the Type 0 PDCCH CSS set and the Type 1 PDCCH CSS set are respectively configured within the RAR window. An SIB1 PDSCH and a Msg2 PDSCH may both be scheduled by downlink fallback DCIs (e.g., DCI format 1_0). The terminal may monitor a DCI for scheduling the SIB1 PDSCH and a DCI for scheduling the Msg2 PDSCH, respectively. The DCIs may be monitored in the same CORESET, and the DCIs may be received in the same CORESET. In other words, the Type 1 PDCCH CSS set and the Type 0 PDCCH CSS set may be associated with the same CORESET.

The RAR window may start after C1 subframes (or slots) from a subframe (or slot) in which the terminal transmits the UL WUS. C1 may be a natural number. The length of the RAR window may be determined by a timer initial value. A transmission order of the SIB1 and Msg2 within the RAR window may not be defined in the technical specifications. The transmission order of the SIB1 and Msg2 within the RAR window may vary depending on configuration of search space sets corresponding to the SIB1 and Msg2, a transmission order intended by the base station, or the like. An on-demand SIB1 may be received earlier than the RAR (e.g., in a slot preceding a slot in which the RAR is received). Alternatively, the on-demand SIB1 may be received at the same time as the RAR (e.g., in the slot in which the RAR is received). Alternatively, the on-demand SIB1 may be received later than the RAR (e.g., in a slot later than the slot in which the RAR is received). Within the RAR window, the Msg2 may be transmitted earlier (e.g., in an earlier slot) than the SIB1. In this case, a minimum set of information required for the terminal to receive the Msg2 PDCCH and the Msg2 PDSCH (e.g., search space set configuration information, initial DL bandwidth part information, PDSCH configuration information, and the like) may be transmitted to the terminal together with the UL WUS configuration information (or PRACH configuration information). Alternatively, the minimum set of information required for the terminal to receive the Msg2 PDCCH and the Msg2 PDSCH (e.g., search space set configuration information, initial DL bandwidth part information, PDSCH configuration information, and the like) may be included in the UL WUS configuration information and transmitted to the terminal. The minimum set of information required for the terminal to receive the Msg2 PDCCH and the Msg2 PDSCH (e.g., search space set configuration information, initial DL bandwidth part information, PDSCH configuration information, and the like) may be signaled to the terminal from another cell (e.g., anchor cell). When an SIB1 window is configured, the SIB1 window may temporally overlap with the RAR window.

According to the above-described method, an amount of information in the UL WUS configuration message may increase, and a signaling overhead for the UL WUS configuration may increase. As a method for resolving the above problem, the SIB1 may be transmitted to the terminal before the Msg2 within the RAR window. The terminal may receive the Msg2 PDCCH/PDSCH based on the configuration information included in the SIB1 after acquiring the SIB1. In consideration of a time required for the terminal to process the received SIB1 PDCCH/PDSCH and acquire the SIB1, a minimum distance (e.g., C2 subframes, slots, or symbols) between a reception time of the SIB1 PDCCH/PDSCH and a reception time of the Msg2 PDCCH/PDSCH within the RAR window may be defined. For example, an operation in which the terminal monitors the Msg2 PDCCH and/or receives the Msg2 PDSCH may be performed starting after C2 slots (or symbols) from a slot (or symbol) in which the SIB1 PDSCH is received. C2 may be a natural number.

In the above-described exemplary embodiments and/or exemplary embodiments to be described later, the SIB1 may be repeatedly transmitted. For example, the SIB1 PDCCH and the SIB1 PDSCH may be repeatedly transmitted for a predefined number of times. Alternatively, the SIB1 PDCCH and the SIB1 PDSCH may be repeatedly transmitted for a number of times preconfigured to the terminal through a signaling procedure. All the repeatedly transmitted SIB1 PDCCHs and all the repeatedly transmitted SIB1 PDSCHs may be transmitted within the RAR window. Alternatively, at least a first SIB1 PDCCH and at least a first SIB1 PDSCH may be transmitted within the RAR window. When the SIB1 is repeatedly transmitted, a minimum distance between the SIB1 and the Msg2 may be interpreted based on the last SIB1 PDSCH constituting the repeated transmission of the SIB1.

According to a proposed method, when the terminal receives both the SIB1 and the Msg2, the terminal may transmit a Msg3 (e.g., Msg3 PUSCH) to the cell. When the terminal fails to successfully receive at least one of the SIB1 and the Msg2 within the RAR window, the terminal may retransmit the UL WUS (or PRACH preamble) instead of entering the Msg3 transmission stage. Similarly or identically to the above-described exemplary embodiment, power ramping may be applied to the retransmitted preamble, and a higher transmission power than the previous transmission may be applied to the retransmitted preamble.

As a variation of (Method 200), the cell may transmit both the SIB1 and the Msg2 in response to the reception of the UL WUS, and the SIB1 and the Msg2 may be transmitted in different time durations. For example, the Msg2 may be transmitted within the RAR window, and the SIB1 may be transmitted in a separately defined duration. The separately defined duration may be referred to as an SIB1 window. The SIB1 window may indicate a duration during which the terminal monitors and receives the SIB1 PDCCH. The SIB1 PDSCH may be transmitted inside or outside the SIB1 window.

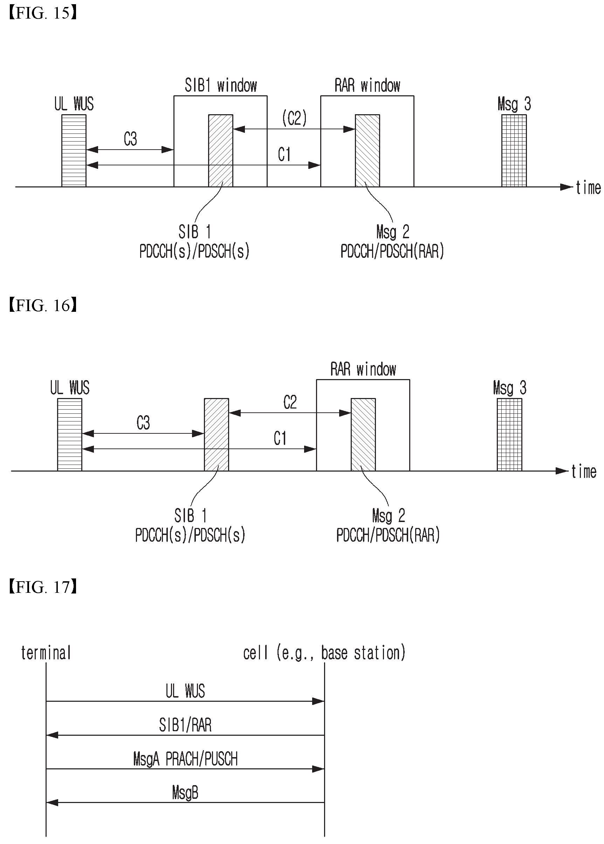

FIG. 15 is a conceptual diagram illustrating a third exemplary embodiment of a four-step random access method based on UL WUS.

Referring to FIG. 15, an SIB1 window and a RAR window may be defined, the terminal may receive the SIB1 PDCCH/PDSCH within the SIB1 window, and the terminal may receive the Msg2 PDCCH/PDSCH within the RAR window. At least one PDCCH monitoring occasion of the Type 0 PDCCH CSS set may be arranged within the SIB1 window. At least one PDCCH monitoring occasion of the Type 1 PDCCH CSS set may be arranged within the RAR window. Similarly or identically to the RAR window, a start time of the SIB1 window may be determined based on the UL WUS resource. For example, the SIB1 window may start in a subframe (or slot) shifted by C3 subframes (or slots) from a subframe (or slot) to which the UL WUS resource belongs. C3 may be a natural number. A time order between the SIB1 window and the RAR window may be defined. In the exemplary embodiment of FIG. 15, in the time domain, the SIB1 window may precede the RAR window. For example, the SIB1 window may be located between the UL WUS resource and the RAR window. The SIB1 window and the RAR window may not overlap each other. In other words, the SIB1 window and the RAR window may be temporally separated. A time interval between the RAR window and the SIB1 window may be defined. Alternatively, a time interval between the RAR window and the SIB1 window may be configured to the terminal. Subframes (or slots) forming the RAR window may be determined by the time interval. The time interval may indicate C2 subframes, C2 slots, or C2 symbols. C2 may be a natural number. C2 may be defined as a minimum time gap between a time when the SIB1 (e.g., SIB1 PDSCH) is transmitted within the SIB1 window and a time when the RAR (e.g., RAR PDCCH) is transmitted within the RAR window.

Meanwhile, a time order between the SIB1 window and the RAR window may not be enforced. The time order between the SIB1 window and the RAR window may be determined in an implementation-specific manner by the base station. In this case, the SIB1 window may be located later than the RAR window. Alternatively, the SIB1 window and the RAR window may temporally overlap. A start time (e.g., start slot) of the SIB1 window may be determined based on a certain time (e.g., the first slot or the last slot) within the RAR window. A transmission order of the SIB1 and the Msg2 (e.g., a reception order of the SIB1 PDCCH and the Msg2 PDCCH) may not be defined in the technical specifications. In this case, configuration information required for Msg2 reception (e.g., carrier, DL bandwidth part, numerology, CORESET, Type 1 PDCCH CSS set, PDSCH configuration, and the like) may be included in the UL WUS configuration information and transmitted to the terminal. The terminal may successfully receive the Msg2 before receiving the SIB1 based on the above-described information. The information included in the UL WUS configuration information may be identically included in the SIB1 (e.g., on-demand SIB1) of the NES cell. A parameter value included in the UL WUS configuration information and a parameter value included in the SIB1 may match for the same parameter. When a parameter value included in the UL WUS configuration information and a parameter value included in the SIB1 for the same parameter do not match, the terminal may apply either one of the parameter values according to a priority rule. For example, the SIB1 configuration may have a higher priority than the UL WUS configuration. In this case, the terminal may perform the corresponding operation according to the parameter value of the SIB1 configuration.

FIG. 16 is a conceptual diagram illustrating a fourth exemplary embodiment of a four-step random access method based on UL WUS.

Referring to FIG. 16, the terminal may receive the SIB1 and the Msg2 after transmitting the UL WUS. The Msg2 may be received within the RAR window, and a time window for SIB1 transmission may not be separately configured. The SIB1 may be transmitted at a time earlier than the Msg2. For example, similarly or identically to the third exemplary embodiment, a minimum time gap between a transmission time of the SIB1 (e.g., SIB1 PDSCH) and a transmission time of the RAR (e.g., RAR PDCCH) may be defined (e.g., configured). The minimum time gap may correspond to C2. Alternatively, a minimum time gap between the transmission time of the SIB1 (e.g., SIB1 PDSCH) and a start time of the RAR window may be defined (e.g., configured). In the present disclosure, the SIB1 may be transmitted at a time later than the RAR. Alternatively, the SIB1 may be transmitted simultaneously with the RAR.

The terminal may monitor the SIB1 PDCCH in a search space set located after the UL WUS resource by default. To minimize a time consumed in the random access procedure of the terminal, it may be preferable that a cell transmits the SIB1 at the earliest possible time after receiving the UL WUS. A slot (or symbol) in which the terminal monitors the SIB1 PDCCH after UL WUS transmission may be fixed to a slot (or symbol) that is D slots (or symbols) after a slot (or symbol) mapped with the UL WUS resource. A value of D may be determined to reflect a minimum time required for UL WUS reception processing and/or SIB1 transmission preparation in the cell. For example, the terminal may transmit the UL WUS in a slot n and may monitor the SIB1 PDCCH in a slot (n+D). Each of n and D may be a natural number. To perform the above-described operation, when the UL WUS resource is configured in the slot n, the base station may be required to configure a PDCCH monitoring occasion of the search space set in the slot (n+D). Alternatively, without signaling for the search space set, when the UL WUS resource is configured in the slot n, the terminal may identify a location of the search space set arranged in the slot (n+D) based on a predefined rule and may monitor the SIB1 PDCCH in the search space set.

As a variation of (Method 200), the SIB1 and the Msg2 may be included in the same PDSCH and transmitted to the terminal. The PDSCH may be the SIB1 PDSCH and may be scheduled by the SIB1 PDCCH (e.g., PDCCH with a CRC scrambled by SI-RNTI). Alternatively, the PDSCH may be the Msg2 PDSCH and may be scheduled by the Msg2 PDCCH (e.g., PDCCH with a CRC scrambled by an RA-RNTI). Alternatively, the PDSCH may be a PDSCH distinguished from both the SIB1 PDSCH and the Msg2 PDSCH. The PDSCH may still be scheduled by a DL fallback DCI (e.g., DCI format 1_0), and the DCI may be monitored in a CSS set. The CSS set may be a Type 0/1 PDCCH CSS set, or may be a CSS set separately configured to the terminal. The terminal may monitor only one search space set to receive the PDSCH.

As another variation of (Method 200), the terminal may expect to receive only the SIB1 without the Msg2 after transmitting the UL WUS. The SIB1 may solely serve as a response message or a confirmation message of the UL WUS, and the terminal may transmit a Msg3 PUSCH to the cell after successfully receiving the SIB1. The SIB1 may include resource allocation and scheduling information, UL timing-related information, and the like required for the transmission of the Msg3 PUSCH by the terminal. Conversely, the terminal may expect to receive the Msg2 after transmitting the UL WUS, and may transmit the Msg3 PUSCH to the cell without receiving the SIB1. Information required for the transmission of the Msg3 PUSCH may be included in the Msg2 and transmitted to the terminal. Alternatively, information required for the transmission of the Msg3 PUSCH may be transmitted to the terminal from another cell (e.g., anchor cell) different from the cell (e.g., NES cell).

According to the above-described method, the terminal may receive the SIB1 before receiving the Msg2, and configuration information required for receiving the Msg2 (e.g., carrier, DL bandwidth part, numerology, CORESET, Type 1-PDCCH CSS set, PDSCH configuration, and the like) may be included in the SIB1 and transmitted to the terminal before the terminal receives the Msg2 PDCCH/PDSCH. The terminal may monitor the Msg2 PDCCH and receive the Msg2 PDSCH corresponding to the Msg2 PDCCH within the RAR window based on the information included in the SIB1, without a separate operation of storing the DL signal in a buffer.

As another method, a search space set for transmission of the Msg2 PDCCH may be configured to the terminal through an MIB (e.g., PBCH). In other words, a Type 0-PDCCH CSS set may be configured through the MIB, and the terminal may monitor the Msg2 PDCCH (e.g., DCI with a CRC scrambled by an RA-RNTI) in the Type 0-PDCCH CSS set. A value of the RA-RNTI required for monitoring the Msg2 PDCCH may be predefined in technical specifications. Alternatively, a value of the RA-RNTI required for monitoring the Msg2 PDCCH may be included in the UL WUS configuration information and transmitted in advance to the terminal. The Msg2 PDSCH may be scheduled in an initial DL bandwidth part. The initial DL bandwidth part may indicate a bandwidth of the CORESET0 configured through the MIB, and the number of RBs in the initial DL bandwidth part may indicate the number of RBs in the CORESET0. According to the above-described method, the terminal may acquire configuration information required for receiving the Msg2 without relying on the SIB1 and may successfully receive the Msg2 before receiving an on-demand SIB1. The above-described Msg2 reception method may be temporarily applied. For example, the above-described Msg2 reception method may be applied before the terminal receives the SIB1 (e.g., on-demand SIB1), and after acquiring the SIB1 message, the terminal may receive the Msg2 based on the configuration information included in the SIB1. As another method, in the above-described case (e.g., when configuration information of a separate search space set for monitoring the Msg2 PDCCH is not included in the UL WUS configuration information, and the terminal monitors the Msg2 PDCCH in the Type 0-PDCCH CSS set), the terminal may expect that the configuration information of a separate search space set for monitoring the Msg2 PDCCH is also not included in the SIB1. In other words, inclusion or non-inclusion of configuration information of the search space set (e.g., Type 1-PDCCH CSS set) for the Msg2 PDCCH may be commonly applied to both the UL WUS configuration and the SIB1. In the above-described case, the terminal may continue to monitor the Msg2 PDCCH in the Type 0-PDCCH CSS set even after receiving the SIB1 (e.g., on-demand SIB1).

FIG. 17 is a sequence chart illustrating a first exemplary embodiment of a random access method based on a conventional two-step RACH procedure.

Referring to FIG. 17, a terminal may transmit a UL WUS to a cell (e.g., base station) and receive an SIB1 from the cell. The terminal may receive a RAR, which is a response message for the UL WUS, from the cell. After receiving the SIB1, the terminal may perform a two-step random access operation based on a legacy RACH procedure. For example, the terminal may transmit a MsgA PRACH/PUSCH to the cell after receiving the SIB1. In other words, the random access procedure of the terminal may be separated from the SIB1 trigger operation and the SIB1 reception operation. According to the above-described method, the UL WUS transmission and the MsgA PRACH transmission may be unnecessarily redundant. Accordingly, the terminal may redundantly receive the RAR twice.

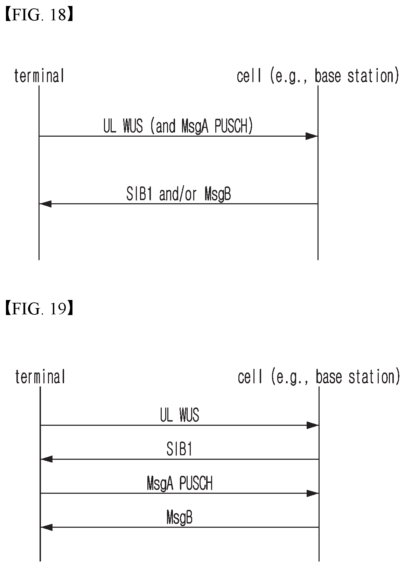

FIG. 18 is a sequence chart illustrating a first exemplary embodiment of a two-step random access method based on UL WUS.

Referring to FIG. 18, a terminal may transmit a UL WUS to a cell (e.g., base station), thereby requesting SIB1 transmission and simultaneously entering a random access procedure. A UL WUS resource may include a first resource, and the first resource may be a PUSCH. Alternatively, in a UL WUS resource formed only of RO(s), the UL WUS may be transmitted together with a MsgA PUSCH. The terminal may expect to receive a response message for the UL WUS and/or MsgA PUSCH from the cell. The response message may include an SIB1 and/or a MsgB. The transmission and reception stage of the response message may be regarded as a second step of a two-step RACH procedure. The terminal may receive the SIB1 and/or MsgB and complete the two-step RACH procedure. According to the above-described method, a MsgA PRACH transmission procedure and/or a MsgB reception procedure may be omitted, and the above-described unnecessary redundancy issue may be resolved. A time required for the random access procedure may be reduced. The above-described exemplary embodiment may be referred to as (Method 300).

FIG. 19 is a sequence chart illustrating a second exemplary embodiment of a two-step random access method based on UL WUS.

Referring to FIG. 19, a random access procedure may be a random access procedure according to a variation of (Method 300). The terminal may transmit a UL WUS to a cell and may receive an SIB1 as a response to the UL WUS. A UL WUS resource may be formed only of RO(s). The terminal may transmit a MsgA PUSCH to the cell based on configuration information included in the received SIB1 and may receive a MsgB as a response to the MsgA PUSCH.

The methods according to the exemplary embodiments of the four-step RACH procedure may be identically or similarly applied to (Method 300). For example, the SIB1 and the MsgB may be received within a RAR window or within a window defined for receiving the MsgB (hereinafter referred to as a 'MsgB window'). Alternatively, the SIB1 may be received in an SIB1 window, and the MsgB may be received in the RAR window (or MsgB window). Alternatively, the MsgB may be received in the RAR window (or MsgB window), and a reception window for the SIB1 may not be separately defined. In this case, the reception of the SIB1 may precede the reception of the MsgB, and a minimum time gap between the reception of the SIB1 and the reception of the MsgB may be defined according to the above-described method. The SIB1 may be received through one SIB1 PDCCH and one SIB1 PDSCH. Alternatively, the SIB1 may be received through multiple SIB1 PDCCHs and multiple SIB1 PDSCHs that are repeatedly transmitted.

In summary of the above-described method, the terminal may trigger SIB1 transmission or 'SIB1 transmission and RACH procedure' by transmitting the UL WUS to the cell. When the RACH procedure is further classified, the terminal may trigger 'SIB1 transmission and four-step RACH procedure' or 'SIB1 transmission and two-step RACH procedure' by transmitting the UL WUS. Whether to perform the random access procedure after the UL WUS transmission may be determined by the terminal (e.g., higher layer of the terminal). The terminal may transmit the UL WUS together with information on a purpose of transmitting the UL WUS (e.g., information on whether to perform a random access procedure for the cell) to the base station. The information may be delivered to the base station explicitly or implicitly through the UL WUS. The information may be UE assistance information.

As a specific method, UL WUS preamble(s) for SIB1 transmission triggering (or camping) and UL WUS preamble(s) for random access procedure may be separately configured. For example, within each RO or each preamble group, UL WUS preamble(s) for SIB1 transmission triggering (or camping) and UL WUS preamble(s) for random access procedure may be distinguished. A set of UL WUS preambles for SIB1 transmission triggering (or camping) may be referred to as a first preamble set. A set of UL WUS preambles for random access procedure may be referred to as a second preamble set. Both the first preamble set and the second preamble set may be configured through a UL WUS configuration. Alternatively, the first preamble set may be configured through a UL WUS configuration, and the second preamble set may be configured through a separate PRACH configuration. According to the above-described exemplary embodiment, the first preamble set may include only one preamble.

When the base station (e.g., NES cell) receives a UL WUS preamble belonging to the first preamble set, the NES cell may transmit the SIB1 and may not transmit the Msg2 or the MsgB. Alternatively, the base station (e.g., NES cell) may transmit the Msg2 or the MsgB to the terminal as a confirmation/response message for the UL WUS, but may not expect to receive a Msg3 (e.g., Msg3 PUSCH) from the terminal. In other words, a random access procedure may not be performed in the NES cell. On the other hand, when the base station (e.g., NES cell) receives a UL WUS preamble belonging to the second preamble set, the NES cell may transmit the SIB1 and may enter a random access procedure by transmitting the Msg2 or the MsgB. The terminal may transmit a Msg3 corresponding to the received Msg2 or MsgB to the NES cell and may receive a Msg4 from the NES cell. The UL WUS transmission may be a part of the random access procedure and may be regarded as a Msg1. The response message (e.g., RAR) corresponding to the UL WUS may be a part of the random access procedure and may be regarded as the Msg2 (or MsgB).

According to the above-described method, the UL WUS preamble transmitted by the terminal may be determined based on a purpose of requesting SIB1 transmission. A message structure of the Msg2 or the MsgB received by the terminal may be determined based on the purpose of requesting SIB1 transmission. For example, a message structure of the Msg2 (hereinafter referred to as 'first Msg2') received when the terminal transmits a UL WUS preamble belonging to the first preamble set and a message structure of the Msg2 (hereinafter referred to as 'second Msg2') received when the terminal transmits a UL WUS preamble belonging to the second preamble set may differ. For example, a specific message/parameter included in the second Msg2 may not be included in the first Msg2. Alternatively, a specific message/parameter included in the first Msg2 may not be included in the second Msg2. According to an exemplary embodiment, the second Msg2 may include information (e.g., RAR UL grant) required for Msg3 transmission of the terminal. In contrast, the first Msg2 may not include information (e.g., RAR UL grant) related to Msg3 transmission. Alternatively, an RAR UL grant included in the first Msg2 may have a different field/parameter structure from that included in the second Msg2. The second Msg2 may include a temporary C-RNTI, whereas the first Msg2 may not include a temporary C-RNTI. A timing advance (TA) required for UL transmission of the terminal may be included in the second Msg2 and may not be included in the first Msg2. Message sizes of the first Msg2 and the second Msg2 may be different.

A specific message/parameter may be commonly included in both the first Msg2 and the second Msg2. For example, a random access preamble ID (RAPID) may be included in both the first Msg2 and the second Msg2. When the RAPID matches an ID of the UL WUS preamble transmitted by the terminal, the terminal may consider that the base station has successfully received the UL WUS. The terminal may expect to receive the SIB1 from the cell to which the UL WUS has been transmitted and may not perform a UL WUS retransmission operation. Regardless of the message structure, a MAC subheader may be commonly included in both the first Msg2 and the second Msg2.

The message structures of the first Msg2 and the second Msg2 may be predefined in the technical specifications. Alternatively, a message structure of a certain Msg2 (e.g., first Msg2) may be included in UL WUS configuration information and signaled to the terminal. The terminal may receive the Msg2 based on an assumption of the message structure corresponding to the UL WUS preamble transmitted by the terminal.

When the terminal receives the second Msg2, the terminal may sequentially perform transmission and reception operations of the Msg3 and Msg4. When the terminal receives the first Msg2, the terminal may not perform the transmission and reception operations of the Msg3 and Msg4. In other words, when the received Msg2 includes at least an RAR UL grant, the terminal may perform a Msg3 transmission operation corresponding to the Msg2.

As another method, the message structure of the Msg2 may be indicated by the MAC subheader included in the Msg2. The terminal may identify the message structure of the Msg2 based on the MAC subheader and may receive the Msg2 based on the message structure. According to the above-described method, the message structure of the Msg2 may be determined by the base station. For example, regardless of a preamble group to which the received UL WUS preamble belongs, the base station may select either the first Msg2 or the second Msg2, and transmit the selected Msg2 to the terminal. For example, even when the terminal transmits a preamble belonging to the second preamble group to request to perform a random access procedure, the base station may instruct the terminal not to perform a random access procedure by transmitting the first Msg2. In other words, a subsequent procedure according to the SIB1 request may be determined by the base station rather than by the terminal.

UL WUS preamble(s) for SIB1 transmission triggering (or camping), UL WUS preamble(s) for four-step RACH procedure, and UL WUS preamble(s) for two-step RACH procedure may be separately configured within each RO or each preamble group. The base station may receive a UL WUS preamble from the terminal and may perform an operation corresponding to the UL WUS preamble.

According to the above-described method, a PRACH preamble may be reused as a UL WUS, and a UL WUS resource may be determined by a PRACH configuration. For example, at least a portion of PRACH preambles allocated for four-step RACH procedure by the PRACH configuration may be configured as first UL WUS preamble(s). At least a portion of PRACH preambles allocated for two-step RACH procedure by the PRACH configuration may be configured as second UL WUS preamble(s). Additionally to or alternatively from the above-described exemplary embodiment, at least a portion of PRACH preambles allocated for contention-free RACH procedure by the PRACH configuration may be configured as third UL WUS preamble(s). Alternatively, preamble(s) that are not allocated for PRACH may exist within an RO or a preamble group, and the preamble(s) not allocated for PRACH may be configured as fourth UL WUS preamble(s).

Each RO or each preamble group may include at least a portion of the first UL WUS preamble(s) through the fourth UL WUS preamble(s). The terminal may notify the cell of a purpose of UL WUS transmission by selectively transmitting at least a portion of the first UL WUS preamble(s) through the fourth UL WUS preamble(s) to the cell. The terminal may trigger both SIB1 transmission and a four-step RACH procedure in the cell by transmitting the first UL WUS preamble, and may trigger both SIB1 transmission and a two-step RACH procedure in the cell by transmitting the second UL WUS preamble. The terminal may trigger only SIB1 transmission in the cell by transmitting the third UL WUS preamble or the fourth UL WUS preamble. In this case, a RACH procedure may not be triggered. The PRACH preamble allocated for contention-free RACH may not be used by a terminal in the RRC idle/inactive mode. Therefore, when the terminal intends to trigger only SIB1 transmission, it may be appropriate to transmit the third UL WUS preamble corresponding to the PRACH preamble. According to the above-described method, the base station may identify trigger information (e.g., request) of the terminal corresponding to the UL WUS preamble received in the cell, and the SIB1 transmission and/or the RACH procedure may be performed in the cell based on the identified trigger information.

As a method different from the above-described method, information on the purpose of transmitting the UL WUS (e.g., whether to perform a random access procedure for the cell) may be transmitted by being included in the first resource. For example, the first resource may be a PUSCH or a MsgA PUSCH. The information may have a size of several bits or several bytes. The information may be defined in a form of UCI or a MAC CE. The information may be polar-coded or LDPC-coded. The information may be transmitted by being included in a PUSCH. Alternatively, the information may be transmitted by being piggybacked on a PUSCH.

### [On-demand SIB1 transmission method]

A cell that has received a UL WUS may transmit an SIB1 to a terminal based on several methods. In a first method, the SIB1 (e.g., SIB1 PDCCH) may be transmitted in a Type 0 PDCCH CSS set configured for the terminal through an MIB. The SIB1 may be transmitted semi-persistently or periodically until a base station decides to suspend SIB1 transmission. In other words, after the terminal transmits the UL WUS, the terminal may periodically monitor the SIB1 PDCCH in the Type 0 PDCCH CSS set. Alternatively, the terminal may monitor the SIB1 PDCCH only in a few periods of the Type 0 PDCCH CSS set configured through the MIB and may not monitor the SIB1 PDCCH after the few periods. For example, the terminal may monitor the SIB1 PDCCH during P consecutive SSB period(s) or P consecutive SIB1 transmission period(s) from the same period as an SSB period in which the UL WUS has been transmitted or from the next period of that SSB period. P may be a natural number. For example, P may be 1. The terminal may monitor the SIB1 PDCCH within the SSB period (or SIB1 period) in which the UL WUS has been transmitted or within the next period of that SSB period (or SIB1 period). If the terminal fails to receive the SIB1 PDCCH and/or SIB1 PDSCH during the P SSB period(s) or the P SIB1 period(s), the terminal may consider that the SIB1 corresponding to the SIB1 request has not been transmitted in the cell. The above-described exemplary embodiment may be referred to as (Method 400).

According to the above-described method, a delay of up to a maximum SIB1 monitoring periodicity (e.g., several tens of ms) may occur until the terminal receives the SIB1 after transmitting the UL WUS. If the terminal intends to camp on the NES cell, the delay time may be tolerable. If the terminal transmits the UL WUS and intends to attempt random access to the NES cell, a method for further reducing the delay time may be required to improve the random access performance and the delay time.

To reduce the delay time, a method of arranging the UL WUS resource immediately before the SIB1 monitoring duration may be considered. For example, a time resource of the UL WUS may be expressed as a slot offset from the SIB1 monitoring duration, and the slot offset (e.g., the time resource of the UL WUS) may be configured to the terminal. Specifically, the SIB1 monitoring duration may correspond to one or multiple half radio frames. A slot (e.g., the first slot) in which the UL WUS is mapped may be expressed as a slot offset (e.g., X slots) ahead of a start slot of the first half radio frame. X may be a natural number. Alternatively, the slot (e.g., the first slot) in which the UL WUS is mapped may be expressed as a slot offset from the first slot to which the Type 0-PDCCH CSS set is mapped within a period. As another method, an SSB monitoring duration may be used as a reference point instead of the SIB1 monitoring duration. For example, the slot (e.g., the first slot) in which the UL WUS is mapped may be expressed as a slot offset from the first slot to which an SSB is mapped within a period.

As another method, the terminal may receive configuration information of an additional search space set to monitor the SIB1 PDCCH. The additional search space set may be determined based on a signaling procedure (e.g., SIBx or DCI) other than the MIB and/or a location of the UL WUS transmission resource. The additional search space set may refer to additional PDCCH monitoring occasions of the Type 0 PDCCH CSS set. Alternatively, the additional search space set may refer to a CSS set distinct from the Type 0 PDCCH CSS set and PDCCH monitoring occasions of the CSS set. In the exemplary embodiments related to the UL WUS-based random access procedure, resources in which the terminal monitors the SIB1 PDCCH may be the additional search space set. The additional search space set may periodically appear with a predetermined periodicity value. The terminal may periodically monitor the additional search space set. The periodicity value may be configured independently of the SSB periodicity value, the legacy SIB1 periodicity value, etc. The periodicity value may have a different value from the SSB periodicity value, the legacy SIB1 periodicity value, etc. Alternatively, the additional search space set may be configured aperiodically. For example, to support the terminal's four-step RACH procedure, the additional search space set for SIB1 reception may be monitored in a time duration determined between a transmission time of the UL WUS and a reception time of the Msg2 at the terminal or a time duration determined between the transmission time of the UL WUS and a transmission time of the Msg3 PUSCH at the terminal. The additional search space set may not be monitored outside the time duration. In other words, when the terminal monitors the Type 0-PDCCH CSS set in the time duration, the terminal may not monitor the conventional Type 0-PDCCH CSS set (e.g., the Type 0-PDCCH CSS set periodically configured based on the same periodicity value as the SSB periodicity value through the MIB). According to the above-described exemplary embodiments, the time duration may be an SIB1 window or RAR window. Hereinafter, for convenience, the time duration may be collectively referred to as an SIB1 window. The above-described exemplary embodiment may be referred to as (Method 410).

The above-described methods may be used together or individually. For example, the SIB1 may be monitored in both the Type 0 PDCCH CSS set configured through the MIB and the additional search space set. Specifically, after the terminal transmits the UL WUS, the terminal may monitor the SIB1 in the SIB1 window and may periodically monitor the SIB1 in the Type 0 PDCCH CSS set indicated by the MIB. Alternatively, the terminal may monitor only one of the Type 0 PDCCH CSS set configured through the MIB and the additional search space set, based on a predetermined condition or an indication (e.g., configuration) from the base station.

The SIB1 window may be configured for the terminal through explicit signaling. For example, information on a start point and/or an end point of the SIB1 window or information on a start point and/or a length of the SIB1 window may be signaled to the terminal. The SIB1 window may be configured in units of slots, and the start point, end point, and/or length of the SIB1 window may correspond to slot(s). Alternatively, the SIB1 window may be configured in units of subframes or milliseconds (ms), and the start point, end point, and/or length of the SIB1 window may correspond to subframe(s) or time values in units of milliseconds.

The SIB1 window may be determined by an implicit method. Alternatively, the SIB1 window may be determined by a combination of an implicit method and an explicit method. For example, the SIB1 window may start from a point delayed by a predetermined time offset from a reference time. The reference time may refer to a time (e.g., symbol or slot) when the terminal transmits the UL WUS. The time offset may be defined in terms of one or more slots, one or more symbols, or a combination of one or more slots and one or more symbols. The time offset may be configured to the terminal. As another example, the SIB1 window may start from a slot or symbol in which a specific CORESET (or PDCCH monitoring occasion) is mapped after the reference time. The reference time may refer to a time (e.g., symbol or slot) when the terminal transmits the UL WUS or a time to which a certain time offset is applied from the time of the UL WUS transmission. The specific CORESET (or PDCCH monitoring occasions) may refer to a CORESET (or PDCCH monitoring occasions) for monitoring the additional search space set, a CORESET (or PDCCH monitoring occasions) for the type 0-PDCCH CSS set, and the like. In the above-described method, the time at which the terminal transmits the UL WUS may refer to a time resource to which the RO in which the terminal transmits the UL WUS preamble is mapped. Alternatively, the reference time may be a time (e.g., the first slot, the last slot, or the slot in which the terminal receives the Msg2) of the RAR window, and the SIB1 window may be arranged in a duration delayed by a time offset from the time of the RAR window. In the above-described method, the length of the SIB1 window may be determined by a separately defined value (e.g., configured value).

For multi-beam transmission, multiple SIB1 PDCCH monitoring occasions may be mapped to the SIB1 window. The multiple SIB1 PDCCH monitoring occasions may be associated with SSBs. The SSBs may be valid SSBs. The terminal may acquire information on valid SSBs included in the UL WUS configuration information in advance according to the above-described method, may map the multiple SIB1 PDCCH monitoring occasions to the valid SSBs, and may monitor SIB1 PDCCH monitoring occasion(s) corresponding to an SSB (e.g., valid SSB) selected by the terminal based on the mapping. Assuming that the number of valid SSBs is M, the terminal may expect that at least M SIB1 PDCCH monitoring occasions corresponding to the M valid SSBs are mapped to the SIB1 window or the RAR window. When the number of SIB1 PDCCH monitoring occasions included in the window exceeds M, at least some of the SSBs may be mapped to the multiple SIB1 PDCCH monitoring occasions within the window. M may be a natural number. The terminal may monitor only SIB1 PDCCH monitoring occasion(s) associated with the SSB selected by the terminal among the SIB1 PDCCH monitoring occasions. Assuming that M SIB1 PDCCH monitoring occasions respectively correspond to the M valid SSBs, the SIB1 PDCCH does not necessarily need to be transmitted in all the M SIB1 PDCCH monitoring occasions. The base station may infer a reception beam (e.g., SSB beam) of the terminal that has requested the SIB1 based on the UL WUS received from the terminal and may transmit the SIB1 PDCCH in an SIB1 PDCCH monitoring occasion corresponding to the reception beam. The base station may or may not transmit the SIB1 PDCCH in the remaining (M-1) SIB1 PDCCH monitoring occasions.

To provide a downlink coverage corresponding to a coverage of the UL WUS, the SIB1 PDSCH triggered by the SIB1 request from the terminal may be repeatedly transmitted. The repeatedly transmitted SIB1 PDSCHs may be scheduled by the same SIB1 PDCCH(s) associated with the same SSB and may be received through the same reception beam (e.g., QCL, QCL type D, DL TCI, etc.). The repeatedly transmitted SIB1 PDSCHs may include the same TB (e.g., the same DL-SCH), and as a result, the repeatedly transmitted SIB1 PDSCHs may include the same SIB1 message. The terminal may receive at least a part (e.g., one or more SIB1 PDSCH(s)) among the repeatedly transmitted SIB1 PDSCHs and may improve reception performance by soft-combining multiple SIB1 PDSCH(s).

The repeatedly transmitted SIB1 PDSCHs may be scheduled by different DCIs. For example, multiple SIB1 PDCCHs may be transmitted within the SIB1 window, and one SIB1 PDCCH may schedule one SIB1 PDSCH constituting the repeated transmission. Only one SIB1 PDCCH may be received in each CORESET (e.g., each PDCCH monitoring occasion), and the multiple SIB1 PDCCHs may be received in different CORESETs (e.g., different PDCCH monitoring occasions). Each SIB1 PDCCH may have unique scheduling information for scheduling the corresponding SIB1 PDSCH. In other words, payloads of the multiple DCIs corresponding to the multiple SIB1 PDCCHs do not necessarily need to be identical. The multiple SIB1 PDSCHs scheduled by the multiple SIB1 PDCCHs may be mapped to different slots. The maximum number K of repetitions of the SIB1 PDSCH may be defined in the technical specifications. K may be a natural number. The terminal may not expect to receive the SIB1 PDSCH for the same SIB1 more than K times within one window or one SIB1 transmission period. On the other hand, the number L of SIB1 PDCCH monitoring occasions arranged within the SIB1 window for repeated transmission of the SIB1 PDSCH may be signaled from the base station to the terminal. For example, a value of L may be included in the UL WUS configuration information. L may be a natural number. Each SSB (e.g., valid SSB) may have L repeated SIB1 PDCCH monitoring occasions. In this case, the total number of SIB1 PDCCH monitoring occasions arranged within the SIB1 window may be M×L. The terminal may monitor L SIB1 PDCCH monitoring occasions corresponding to the selected SSB among the total M×L SIB1 PDCCH monitoring occasions. The SIB1 PDCCH monitoring occasions may be TDMed. In other words, the SIB1 PDCCH monitoring occasions may be mapped to different time resources.

Alternatively, the L repeated SIB1 PDCCH monitoring occasions may be mapped to L respective SIB1 windows, and only one SIB1 PDCCH monitoring occasion may be monitored within one SIB1 window. In consideration of multi-beam operations, the terminal may monitor M SIB1 PDCCH monitoring occasions associated with different SSBs within each SIB1 window.

According to the above-described method, as the number of repeated transmissions of the SIB1 PDSCH increases, the control signaling overhead may also increase. As a method for resolving the above-described problem, the repeatedly transmitted SIB1 PDSCHs may be scheduled by one DCI. The one DCI may be transmitted within the SIB1 window according to the above-described method. The number of SIB1 PDSCHs constituting the repeated transmission may be predefined the in the technical specifications. Alternatively, the number of repeated transmissions of the SIB1 PDSCH may be included in the UL WUS configuration information and signaled to the terminal. Alternatively, the number of repeated transmissions of the SIB1 PDSCH may be signaled to the terminal together with the UL WUS configuration information. As a more flexible method, the number of repeated transmissions of the SIB1 PDSCH may be included in the DCI and dynamically signaled to the terminal. The SIB1 PDSCHs may be respectively mapped to consecutive slots, and the SIB1 PDSCHs may be mapped to the same time-frequency resource in each slot. Some of the SIB1 PDSCHs (e.g., SIB1 PDSCHs overlapping with UL symbols) may be dropped.

Configuration information related to the SIB1 window may be included in the UL WUS configuration information and signaled to the terminal. Alternatively, the configuration information related to the SIB1 window may be signaled to the terminal together with the UL WUS configuration information. The terminal may determine search space set(s) for SIB1 PDCCH monitoring based on the configuration information, may receive the SIB1 PDCCH in the search space set(s), and may receive the SIB1 PDSCH scheduled by the SIB1 PDCCH. Alternatively, the configuration information related to the SIB1 window may be included in a downlink signal (e.g., Msg2) received after the terminal transmits the UL WUS and may be transmitted to the terminal. Alternatively, the SIB1 window may be determined according to a predefined rule without a separate signaling procedure.

Similarly or identically to the above-described exemplary embodiment, the UL WUS may be retransmitted. For example, the terminal may perform a blind detection operation for an SIB1 after transmitting the UL WUS, and may retransmit the UL WUS when reception of the SIB1 fails. In other words, the SIB1 may be regarded as a confirmation message (e.g., response message) for the UL WUS. The blind detection operation for the SIB1 may be performed in a predetermined time duration (e.g., time window), and the time duration may be determined based on a resource location of the UL WUS transmitted by the terminal.

On the other hand, according to (Method 400), a long time may be required until the terminal receives the SIB1 after transmitting the UL WUS. In this case, the NES cell may notify the terminal that the UL WUS has been successfully received by transmitting another downlink signal instead of the SIB1, and the downlink signal may be regarded as an acknowledgment message (e.g., response message) for the UL WUS. For example, the downlink signal may be a Msg2 or MsgB. The terminal may monitor the downlink signal (e.g., Msg2 or MsgB) in a certain time duration (e.g., RAR window or Msg2 window), and may retransmit the UL WUS when reception or detection of the downlink signal fails. The downlink signal may be transmitted at a point earlier than the earliest SIB1 monitoring time point of the terminal, and the retransmission of the UL WUS may be performed more quickly.

If the terminal successfully receives the downlink signal but fails to receive the SIB1, the terminal may regard the situation as an erroneous operation of the base station. The terminal may attempt to receive the SIB1 for a certain time and, if the reception of the SIB1 fails, may retransmit the UL WUS to trigger SIB1 transmission again. The certain time may be predefined in the technical specifications. For example, the certain time may be determined by a timer. The terminal may start the timer from a time of transmitting the UL WUS is transmitted or from a time of receiving the downlink signal, and if the SIB1 is not received until the timer expires, the terminal may retransmit the UL WUS after the timer expires.

Both the downlink signal and the SIB1 may be regarded as confirmation messages for the UL WUS. The terminal may regard the UL WUS transmission as having failed when either the downlink signal (e.g., Msg2, MsgB) or the SIB1 is not successfully received, and may retransmit the UL WUS. The terminal may regard the UL WUS transmission as having succeeded when either the downlink signal (e.g., Msg2, MsgB) or the SIB1 is successfully received, and may not retransmit the UL WUS. In this case, the terminal may receive the SIB1 regardless of whether the downlink signal (e.g., Msg2, MsgB) is received. For example, the terminal may support both an operation of monitoring the SIB1 PDCCH after receiving the Msg2 and an operation of monitoring the SIB1 PDCCH without receiving the Msg2 (or an operation of receiving the Msg2 after receiving the SIB1).

For the retransmission of the UL WUS, the UL WUS resource may be periodically configured. The initial transmission and retransmission (or the first retransmission and second retransmission) of the UL WUS may be transmitted in different UL WUS periods. Alternatively, the initial transmission and retransmission (or the first retransmission and second retransmission) of the UL WUS may be transmitted in different resources (e.g., UL WUS occasions) within the same UL WUS period. The UL WUS occasions for different transmissions/retransmissions may be arranged with a sufficiently long time interval between the UL WUS occasions to allow transmission of the downlink signal. Alternatively, the UL WUS resources (e.g., UL WUS occasions) may be configured without constraints on the periodicity value, and the terminal may retransmit the UL WUS in the earliest UL WUS resource appearing after the duration for receiving the confirmation message for the UL WUS or the earliest UL WUS resource appearing after a predetermined time offset from the duration for receiving the confirmation message for the UL WUS. The duration for receiving the confirmation message for the UL WUS may include the Msg2 window, MsgB window, and/or SIB1 window.

### [Operation in RRC connected mode]

After successfully completing the above-described UL WUS-based random access operation, the mode (e.g., operating mode) of the terminal may be transitioned to the RRC connected mode. In the RRC connected mode, the terminal may still transmit a preamble in a UL WUS resource. When the terminal fails to receive an SIB1 from a serving cell to which the terminal is connected, the terminal may request SIB1 transmission by transmitting a UL WUS. The terminal may transmit a preamble in a UL WUS resource (or a PRACH resource corresponding to the UL WUS resource) and may trigger a contention-free RACH procedure in the serving cell. In other words, the terminal may receive a PDCCH order from the serving cell, may select one of contention-free RACH preambles allocated to a UL WUS RO (or a RACH RO corresponding to a UL WUS WO), and may transmit the selected contention-free RACH preamble to the serving cell. In other words, the UL WUS resource and UL WUS transmission procedure may still be valid in the RRC connected mode. In this case, other UL transmissions may not be performed in the UL WUS resource. The terminal may not expect that the UL WUS resource overlaps with other semi-statically configured UL resources. The other UL transmission may refer to a UL transmission (e.g., PUCCH, PUSCH, SRS, etc.) excluding a PRACH or random access preamble.

Meanwhile, a UL BWP of the terminal may be switched. Even when the UL WUS resource is arranged within an initial UL BWP, the UL WUS resource may not be fully included in a currently activated UL BWP due to the BWP switching. Additionally to or alternatively from the above-described exemplary embodiment, the UL WUS resource may overlap with DL symbol(s). In this case, the UL WUS resource may be considered invalid. The terminal may acquire, from a base station (or from the serving cell), a configuration of a new UL WUS resource included in the activated UL BWP, and may transmit the UL WUS in the new UL WUS resource. In other words, the configuration of the UL WUS resource may be updated. For example, the UL WUS resource may be configured per UL bandwidth part. When the UL WUS configuration is updated, the base station may transmit information indicating that the UL WUS configuration has been updated to the terminal. The information may be included in a paging message or a paging DCI and may be signaled to the terminal. The information may be received by a terminal in the RRC idle/inactive mode and/or a terminal in the RRC connected mode.

As another method, the terminal may not use the UL WUS resource in the RRC connected mode. The terminal may ignore the configuration of the UL WUS resource and may perform other UL transmissions in the UL WUS resource. For example, a PUSCH may be mapped and transmitted on a resource region including the resource (e.g., REs) to which the UL WUS is mapped. An unused UL WUS resource may refer to a time-frequency resource region to which a UL WUS is mapped. Alternatively, an unused UL WUS resource may refer to a UL WUS preamble set.

Similarly or identically to the above-described exemplary embodiment, on-demand SIB1 transmission may be performed in a burst transmission form. In the burst transmission, a predefined number (e.g., a preconfigured number) of SIB1 bursts may be transmitted once, and thereafter, SIB1 may not be transmitted. The SIB1 transmission may be activated and deactivated. The SIB1 transmission in a cell may be activated by a UL WUS transmission of the terminal, and the SIB1 may be transmitted on a periodically configured SIB1 resource (e.g., Type 0 PDCCH CSS set or additional search space set). In this case, the base station may instruct other terminals connected to the cell (e.g., terminals in the RRC connected mode) to receive the SIB1. The SIB1 transmission in the cell may be deactivated, and the SIB1 transmission in the resource may be suspended. In this case, the base station may notify the terminal, through a signaling message, that SIB1 transmission is deactivated in the cell, SIB1 transmission is to be deactivated in the cell, SIB1 is not transmitted in the cell, or SIB1 is not to be transmitted in the cell. The signaling message (e.g., indication information) may be generated by a higher layer. For example, the indication information may be defined as a MAC CE or an RRC message, and the indication information may be included in a PDSCH and transmitted to the terminal. As another example, the indication information may be dynamically signaled to the terminal through a DCI. According to an exemplary embodiment, the DCI may be a paging DCI. The paging message may include new information required for on-demand SIB1 reception (e.g., information indicating an active or inactive state of the SIB1). Alternatively, the terminal may receive, through the paging message, information indicating that the SIB1 and UL WUS configurations have been updated, and may receive the on-demand SIB1 based on the received information. The terminal may perform a PDCCH monitoring operation in the SIB1 monitoring resource (e.g., SIB1 window) within a duration during which the SIB1 monitoring resource is activated (e.g., a duration during which the SIB1 PDCCH is transmitted). When the SIB1 monitoring resource is deactivated, the SIB1 monitoring resource may be used for other DL transmissions. For example, a PDSCH may be mapped to a resource region including the SIB1 monitoring resource (e.g., Type 0 PDCCH CSS set or additional search space set) and may be transmitted to the terminal.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a terminal, comprising:
receiving a first signaling message from a first cell;
receiving a second signaling message from a second cell;
performing a determination procedure for determining whether to transmit a wake-up signal (WUS) to the second cell based on the first signaling message and the second signaling message;
transmitting the WUS to the second cell in an uplink resource based on a result of the determination procedure;
receiving a response message for the WUS from the second cell; and
receiving first system information of the second cell from the second cell,
wherein the uplink resource is configured based on the first signaling message, and the first system information includes at least a system information block 1 (SIB1).

2. The method according to claim 1, wherein the first signaling message is included in second system information of the second cell, which is received from the first cell.

3. The method according to claim 1, wherein the second signaling message is a payload included in a master information block (MIB) received from the second cell or included in a physical broadcast channel (PBCH) received from the second cell.

4. The method according to claim 1, wherein the second signaling message includes a codepoint of a field indicating a number of subcarriers between resource blocks (RBs) occupied by a synchronization signal block (SSB) received from the second cell and an RB boundary of the second cell.

5. The method according to claim 1, wherein the determination procedure includes a procedure for determining whether the second cell is transmitting the first system information.

6. The method according to claim 1, wherein the first system information is included in a physical downlink shared channel (PDSCH), and the terminal monitors a physical downlink control channel (PDCCH) that schedules the PDSCH in a search space set.

7. The method according to claim 6, wherein configuration information of the search space set is included in an MIB of the second cell together with the second signaling message, and the MIB is transmitted from the second cell to the terminal.

8. The method according to claim 6, wherein configuration information of the search space set is included in second system information of the second cell together with the first signaling message, and the second system information is transmitted from the first cell to the terminal.

9. The method according to claim 1, wherein the first system information is received within a time window, and the time window is determined based on configuration information included in second system information of the second cell, the second system information including the first signaling message.

10. The method according to claim 1, wherein the terminal camps on the second cell based on the first system information regardless of indication information of an access barring field included in an MIB of the second cell.

11. A method of a base station, comprising:
transmitting a first signaling message to a terminal in a first cell of the base station;
transmitting a second signaling message to the terminal in a second cell of the base station;
receiving a wake-up signal (WUS) from the terminal in an uplink resource of the second cell;
transmitting a response message for the WUS to the terminal in the second cell; and
transmitting first system information of the second cell to the terminal in the second cell,
wherein the uplink resource is configured based on the first signaling message, and the first system information includes at least a system information block 1 (SIB1).

12. The method according to claim 11, wherein the first signaling message is included in second system information of the second cell transmitted from the first cell.

13. The method according to claim 11, wherein the second signaling message is a payload included in a master information block (MIB) transmitted from the second cell or included in a physical broadcast channel (PBCH) transmitted from the second cell.

14. The method according to claim 11, wherein the second signaling message includes a codepoint of a field indicating a number of subcarriers between resource blocks (RBs) occupied by a synchronization signal block (SSB) transmitted from the second cell and an RB boundary of the second cell.

15. The method according to claim 11, wherein the first system information is included in a physical downlink shared channel (PDSCH), and a physical downlink control channel (PDCCH) that schedules the PDSCH is transmitted in a search space set.

16. The method according to claim 15, wherein configuration information of the search space set is included in an MIB of the second cell together with the second signaling message, and the MIB is transmitted from the second cell to the terminal.

17. The method according to claim 15, wherein configuration information of the search space set is included in second system information of the second cell together with the first signaling message, and the second system information is transmitted from the first cell to the terminal.

18. The method according to claim 11, wherein the first system information is transmitted within a time window, and the time window is determined based on configuration information included in second system information of the second cell, the second system information including the first signaling message.

19. A terminal comprising at least one processor, wherein the at least one processor causes the terminal to perform:
receiving a first signaling message from a first cell;
receiving a second signaling message from a second cell;
performing a determination procedure for determining whether to transmit a wake-up signal (WUS) to the second cell based on the first signaling message and the second signaling message;
transmitting the WUS to the second cell in an uplink resource based on a result of the determination procedure;
receiving a response message for the WUS from the second cell; and
receiving first system information of the second cell from the second cell,
wherein the uplink resource is configured based on the first signaling message, and the first system information includes at least a system information block 1 (SIB1).

20. The terminal according to claim 19, wherein the first signaling message is included in second system information of the second cell, which is received from the first cell.
